(19)

**Europäisches Patentamt**
**European Patent Office**
**Office européen des brevets**

(11) **EP 3 312 905 B1**

(12) **EUROPEAN PATENT SPECIFICATION**

(45) Date of publication and mention
of the grant of the patent:
**14.08.2019 Bulletin 2019/33**

(51) Int Cl.:
***H01M 2/14*** *(2006.01)*      ***H01M 2/16*** *(2006.01)*
***H01M 10/052*** *(2010.01)*

(21) Application number: **17197989.1**

(22) Date of filing: **24.10.2017**

(54) **SEPARATOR, ELECTROCHEMICAL CELL INCLUDING SEPARATOR, METHOD OF PREPARING SEPARATOR, AND NON-WOVEN FABRIC**

SEPARATOR, ELEKTROCHEMISCHE ZELLE MIT DEM SEPARATOR, VERFAHREN ZUR HERSTELLUNG DES SEPARATORS UND VLIESSTOFF

SÉPARATEUR, CELLULE ÉLECTROCHIMIQUE COMPRENANT LE SÉPARATEUR, PROCÉDÉ DE PRÉPARATION DE SÉPARATEUR ET TISSU NON TISSÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.10.2016 KR 20160138636**

(43) Date of publication of application:
**25.04.2018 Bulletin 2018/17**

(73) Proprietor: **Samsung Electronics Co., Ltd.**
**Gyeonggi-do 16677 (KR)**

(72) Inventors:
• **KIM Nagjong**
**16678 Gyeonggi-do (KR)**
• **LEE Sunghaeng**
**16678 Gyeonggi-do (KR)**
• **KANG Jin Kyu**
**16678 Gyeonggi-do (KR)**
• **PARK Jinhwan**
**16678 Gyeonggi-do (KR)**
• **PARK Kitae**
**16678 Gyeonggi-do (KR)**
• **PARK Soojin**
**16678 Gyeonggi-do (KR)**

(74) Representative: **Grünecker Patent- und Rechtsanwälte**
**PartG mbB**
**Leopoldstraße 4**
**80802 München (DE)**

(56) References cited:
**EP-A1- 3 098 880      EP-A1- 3 244 469
JP-A- 2013 251 236      KR-A- 20160 079 634
US-A1- 2016 190 534**

**Description**

CROSS-REFERENCE TO RELATED APPLICATION

This application claims the benefit of Korean Patent Application No. 10-2016-0138636, filed on October 24, 2016, in the Korean Intellectual Property Office.

BACKGROUND

1. Field

The present disclosure relates to a separator, an electrochemical cell including the separator, a method of preparing the separator, and non-woven fabric useful in or as a separator.

2. Description of the Related Art

Electrochemical cells such as lithium secondary batteries use a separator that prevents short circuit by separating a cathode and an anode. The separator needs to be tolerant to an electrolyte solution and have low internal resistance.

In recent years, demand for an electrochemical cell having high thermal resistance has increased due to increased use of electrochemicals cell in vehicles.

A polyolefin-based porous layer formed of polyethylene or polypropylene has been used as a separator in a lithium secondary battery. However, in the case of a battery for a vehicle, high thermal resistance at a temperature of about 150°C or higher is required, and thus a polyolefin-based separator may not be useful in such a battery.

Non-woven fabrics including non-woven cellulose fabrics can have a high thermal resistance, and thus may be used as a separator. However, non-woven fabric including cellulose has low strength.

Therefore, a separator including cellulose and having high strength is needed.

Provided herein is a separator that provides improved tensile strength, thermal stability, and charge/discharge characteristics. In one aspect, the separator comprises a porous film having a tensile strength of about 60 MPa or greater, wherein the porous film comprises carboxyl-group-containing cellulose nanofibers, wherein the carboxyl-group-containing cellulose nanofibers comprise a group of Formula 1 or Formula 2 bound to a carbon atom of a pyranose ring in the carboxyl-group-containing cellulose nanofibers:

Formula 1 is            $-R_1-O-R_2-COOM$

Formula 2            $-O-R_2-COOM$

wherein $R_1$ and $R_2$ are each independently a substituted or unsubstituted C1-C10 alkylene group, and M is hydrogen or an alkali metal. Also provided is an electrochemical cell comprising the separator.

Also provided is a non-woven fabric comprising a porous film having a tensile strength of about 60 MPa or greater, the porous film comprising carboxyl-group-containing cellulose nanofibers, wherein the carboxyl-group-containing cellulose nanofibers comprise a group of Formula 1 or Formula 2 bound to a carbon atom of a pyranose ring in the carboxyl-group-containing cellulose nanofibers:

Formula 1 is            -R1-O-R2-COOM

Formula 2            -O-R2-COOM

wherein R1 and R2 are each independently a substituted or unsubstituted C1-C10 alkylene group, and M is hydrogen or an alkali metal, which is useful for providing a separator or for other uses.

According to another embodiment, a method of preparing a non-woven fabric or separator is provided, which method includes fermenting a first composition including a water-soluble polymer together with a bacteria to thereby produce a second composition including carboxyl-group-containing cellulose nanofibers; separating the carboxyl-group-containing cellulose nanofibers from the second composition; and preparing a porous film from the separated carboxyl-group-containing cellulose nanofibers.

Additional aspects will be set forth in part in the description which follows and, in part, will be apparent from the description, or may be learned by practice of the presented embodiments.

BRIEF DESCRIPTION OF THE DRAWINGS

These and/or other aspects will become apparent and more readily appreciated from the following description of the embodiments, taken in conjunction with the accompanying drawings in which:

FIG. 1 is a transmission electron microscope (TEM) image of carboxyl-group-containing cellulose nanofibers prepared as described in Example 1;
FIG. 2 is a TEM image of cellulose nanofibers prepared as described in Comparative Example 1; and
FIG. 3 is a schematic view of a lithium battery according to an embodiment.

DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

In accordance with illustrative embodiments, a separator, an electrochemical cell including the separator, a method of preparing the separator, and non-woven fabric will be described in detail.

"Film" as used herein has its ordinary meaning, i.e., a thin sheet-like structure. As used herein, the term "porous film" refers to a film that includes intentionally introduced pores or a film having intentionally controlled porosity.

A separator according to an embodiment comprises, consists essentially of, or consists of a porous film comprising carboxyl-group-containing cellulose nanofibers (CNFs) having a tensile strength of about 60 MPa or greater, wherein the carboxyl-group-containing cellulose nanofibers comprise a group of Formula 1 or Formula 2 bound to a carbon atom of a pyranose ring in the carboxyl-group-containing cellulose nanofibers:

Formula 1 is          -R1-O-R2-COOM

Formula 2          -O-R2-COOM

wherein R1 and R2 are each independently a substituted or unsubstituted C1-C10 alkylene group, and M is hydrogen or an alkali metal. The separator has a sheet-like shape. In related embodiments, the porous film comprises, consists essentially of, or consists of the carboxyl-group-containing CNFs. Due to inclusion of a carboxyl group (i.e., covalently linked) on a surface thereof, the carboxyl-group-containing CNFs may have improved dispersibility and a reduced diameter. In this regard, the porous film including the carboxyl-group-containing cellulose nanofibers may provide a high tensile strength of about 60 MPa or greater. For example, a tensile strength of the porous film may be about 70 MPa or greater. For example, a tensile strength of the porous film may be about 80 MPa or greater. For example, a tensile strength of the porous film may be about 90 MPa or greater. For example, a tensile strength of the porous film may be about 100 MPa or greater. For example, a tensile strength of the porous film may be about 110 MPa or greater. For example, a tensile strength of the porous film may be about 120 MPa or greater. For example, a tensile strength of the porous film may be about 130 MPa or greater. For example, a tensile strength of the porous film may be about 140 MPa or greater. For example, a tensile strength of the porous film may be about 150 MPa or greater. For example, a tensile strength of the porous film may be about 160 MPa or greater. For example, a tensile strength of the porous film may be in a range of about 60 MPa to about 400 MPa. For example, a tensile strength of the porous film may be in a range of about 70 MPa to about 400 MPa. For example, a tensile strength of the porous film may be in a range of about 80 MPa to about 400 MPa. For example, a tensile strength of the porous film may be in a range of about 90 MPa to about 400 MPa. For example, a tensile strength of the porous film may be in a range of about 100 MPa to about 400 MPa. For example, a tensile strength of the porous film may be in a range of about 60 MPa to about 300 MPa. For example, a tensile strength of the porous film may be in a range of about 60 MPa to about 200 MPa. For example, a tensile strength of the porous film may be in a range of about 100 MPa to about 200 MPa. For example, a tensile strength of the porous film may be in a range of about 120 MPa to about 180 MPa. When a tensile strength of the porous film is within these ranges, a minimum tensile strength required for preparation of a winding-type battery may be achieved, separator durability during a charge/discharge process may increase as puncture strength improves, and battery capacity may increase as separator thickness decreases. When a tensile strength of the porous film is too low, durability of the separator may deteriorate, yield may decrease according to damage that has occurred during preparation of a battery, a winding-type battery may not be manufactured, durability of the separator may be low due to a puncture strength being weak, and a battery capacity may deteriorate as a separator thickness for securing a minimum tension increases.

The amount (e.g., concentration) carboxyl groups of the carboxyl-group-containing CNFs included in the separator may be about 0.02 mmol/g or greater. For example, an amount of a carboxyl group of the carboxyl-group-containing CNFs included in the separator may be about 0.10 mmol/g or greater. For example, an amount of a carboxyl group of the carboxyl-group-containing CNFs included in the separator may be about 0.15 mmol/g or greater. For example, an amount of a carboxyl group of the carboxyl-group-containing CNFs included in the separator may be about 0.20 mmol/g or greater. For example, an amount of a carboxyl group of the carboxyl-group-containing CNFs included in the separator may be in a range of about 0.02 mmol/g to about 10 mmol/g. For example, an amount of a carboxyl group of the carboxyl-group-containing CNFs included in the separator may be in a range of about 0.02 mmol/g to about 5 mmol/g. For example, an amount of a carboxyl group of the carboxyl-group-containing CNFs included in the separator may be in a range of about 0.02 mmol/g to about 3 mmol/g. For example, an amount of a carboxyl group of the carboxyl-group-containing CNFs included in the separator may be in a range of about 0.02 mmol/g to about 2 mmol/g. For example, an amount of a carboxyl group of the carboxyl-group-containing CNFs included in the separator may be in a range of about 0.02 mmol/g to about 1 mmol/g. When the porous film includes the carboxyl-group-containing CNFs having a carboxyl group at an amount within these ranges, the separator may have an improved tensile strength and an improved tensile modulus. When an amount of the carboxyl group is too low, a tensile strength of the porous film prepared by using the carboxyl-group-containing CNFs may deteriorate.

An average diameter of the carboxyl-group-containing CNFs included in the separator may be about 45 nm or less. For example, an average diameter of the carboxyl-group-containing CNFs included in the separator may be about 40 nm or less. For example, an average diameter of the carboxyl-group-containing CNFs included in the separator may be about 35 nm or less. For example, an average diameter of the carboxyl-group-containing CNFs included in the separator may be about 30 nm or less. For example, an average diameter of the carboxyl-group-containing CNFs included in the separator may be about 25 nm or less. For example, an average diameter of the carboxyl-group-containing CNFs included in the separator may be in a range of about 1 nm to about 45 nm. For example, an average diameter of the carboxyl-group-containing CNFs included in the separator may be in a range of about 5 nm to about 45 nm. When the porous film includes the carboxyl-group-containing CNFs having an average diameter within these ranges, a tensile strength of the separator may improve. When an average diameter of the carboxyl-group-containing CNFs is too great, dispersibility of the CNFs may deteriorate, and thus a tensile strength of the porous film prepared by using the carboxyl-group-containing CNFs may deteriorate. A method of measuring an average diameter of the carboxyl-group-containing CNFs may be referred to in Evaluation Example 2.

A full width at half maximum (FWHM) in a diameter distribution graph of the carboxyl-group-containing CNFs in the separator may be about 50 nm or less. A FWHM in a diameter distribution graph illustrating the number of CNFs according to a diameter of the carboxyl-group-containing CNFs may be about 48 nm or less. For example, a FWHM in a diameter distribution graph of the carboxyl-group-containing CNFs may be about 45 nm or less. For example, a FWHM in a diameter distribution graph of the carboxyl-group-containing CNFs may be about 40 nm or less. For example, a FWHM in a diameter distribution graph of the carboxyl-group-containing CNFs may be about 35 nm or less. For example, a FWHM in a diameter distribution graph of the carboxyl-group-containing CNFs may be about 30 nm or less. For example, a FWHM in a diameter distribution curve of the carboxyl-group-containing CNFs may be about 25 nm or less. For example, a FWHM in a diameter distribution graph of the carboxyl-group-containing CNFs may be about 20 nm or less. For example, a FWHM in a diameter distribution graph of the carboxyl-group-containing CNFs may be about 15 nm or less. For example, a FWHM in a diameter distribution curve of the carboxyl-group-containing CNFs may be about 10 nm or less, For example, a FWHM in a diameter distribution graph of the carboxyl-group-containing CNFs may be in a range of about 1 nm to about 45 nm. For example, a FWHM in a diameter distribution graph of the carboxyl-group-containing CNFs may be in a range of about 5 nm to about 45 nm. For example, a FWHM in a diameter distribution graph of the carboxyl-group-containing CNFs may be in a range of about 10 nm to about 45 nm. For example, when the carboxyl-group-containing CNFs have a narrow FWHM, homogeneity of the porous film prepared by using the carboxyl-group-containing CNFs improves, and a tensile strength may increase as the number of contact points between fibers increases. When a FWHM of the carboxyl-group-containing CNFs increases excessively, an amount of the carboxyl-group-containing CNFs having a large diameter increases, and thus homogeneity of the porous film prepared by using the carboxyl-group-containing CNFs may deteriorate and the number of contact points between fibers may decrease, which may result in deterioration of the tensile strength.

In the porous film included in the separator, a carboxyl group covalently bound to a carbon that is part of a pyranose ring in the carboxyl-group-containing CNFs may be represented by Formula 1 or Formula 2:

Formula 1        $-R_1-O-R_2-COOM$

Formula 2        $-O-R_2-COOM$

In Formulae 1 and 2, $R_1$ and $R_2$ are each independently a substituted or unsubstituted C1-C10 alkylene group (i.e., divalent alkyl), and M is hydrogen or an alkali metal. For example, the alkali metal may be lithium, sodium, or potassium. For example, $R_1$ and $R_2$ may each independently be a methylene group. For example, the carboxyl group bound to carbons that form a pyranose ring in the carboxyl-group-containing CNFs may be - $CH_2OCH_2COONa$ or -$OCH_2COONa$. The pyranose ring may be glucopyranose.

In this regard, the carboxyl group represented by Formula 1 or Formula 2 in the carboxyl-group-containing CNFs has a detailed structure that is different from a COOM structure of a conventional carboxyl group directly bound to carbons that form a pyranose ring in oxidized cellulose nanofibers obtained by a chemical oxidation reaction in that there is intermediate group such as -$R_1$-O-$R_2$- or -O-$R_2$- between carboxyl group and pyranose ring. When used in the lithium battery, in the porous film included in the separator, the carboxyl group may have lithium as counter ion.

The carboxyl-group-containing CNFs in the porous film may be included at an amount in a range of about 30 wt% to about 100 wt%, or, for example, about 40 wt% to about 100 wt%, about 50 wt% to about 100 wt%, about 60 wt% to about 100 wt%, about 70 wt% to about 100 wt%, about 80 wt% to about 100 wt%, about 90 wt% to about 100 wt%, about 95 wt% to about 100 wt%, about 30 wt% to about 95 wt%, about 40 wt% to about 92 wt%, about 50 wt% to about 95 wt%, about 60 wt% to about 95 wt%, about 70 wt% to about 95 wt%, about 80 wt% to about 95 wt%, about 90 wt% to about 95 wt%, about 95 wt% to about 97.5 wt%, about 30 wt% to about 80 wt%, about 30 wt% to about 70 wt%, about 30 wt% to about 60 wt%, about 30 wt% to about 50 wt%, about 40 wt% to about 80 wt%, about 40 wt% to about 70 wt%, about 40 wt% to about 60 wt%, about 50 wt% to about 80 wt%, or about 50 wt% to about 90 wt%, based on a total weight of the porous film.

Carboxyl-group-containing cellulose of the carboxyl-group-containing CNFs in the porous film may be carboxyl-group-containing microbial cellulose (or bacterial cellulose). That is, the carboxyl-group-containing microbial CNFs result from fermentation of a culture solution including a bacterium and may be directly obtained from the culture solution including a bacterium. Therefore, the carboxyl-group-containing microbial CNFs are different from a simple mixture of conventional microbial CNFs and a carboxyl-group-containing compound (e.g., it can be distinguished based on absorption spectra as discussed below).

For example, the carboxyl-group-containing microbial cellulose may be obtained by using a bacterium derived from the genus *Enterobacter, Gluconacetobacter, Komagataeibacter, Acetobacter, Achromobacter, Agrobacterium, Alcaligenes, Azotobacter, Pseudomonas, Rhizobium, Sarcina, Klebsiella,* or *Escherichia,* but embodiments are not limited thereto, and any bacterium available in the art capable of producing the carboxyl-group-containing microbial cellulose may be used. For example, a bacterium of the genus *Actetobacter* may be *Actetobacterpasteurianus.* For example, a bacterium of the genus *Agrobacterium* may be *Agrobacterium tumefaciens.* For example, a bacterium of the genus *Rhizobium* may be *Rhizobium leguminosarum.* For example, a bacterium of the genus *Sarcina* may be *Sarcina ventriculi.* For example, a bacterium of the genus *Gluconacetobacter* may be *Gluconacetobacter xylinum.* For example, a bacterium of the genus *Klebsiella* may be *Klebsiella pneumoniae.* A bacterium of the genus *Escherichia* may be *Escherichia coli.*

The carboxyl-group-containing microbial cellulose included in the porous film may have an absorption peak that corresponds to a carboxyl group about $1572 cm^{-1}$ in an IR spectrum. Microbial cellulose not including a carboxyl group does not have the absorption peak.

The porous film may further include conventional cellulose or nanofibers, other than those above, in addition to the carboxyl-group-containing CNFs. For example, the porous film may further include wood CNFs, but embodiments are not limited thereto, and any CNF capable of improving a tensile strength of a separator available in the art may be used.

A tensile modulus of the porous film may be about 1000 MPa or greater. For example, a tensile modulus of the porous film may be about 1200 MPa or greater. For example, a tensile modulus of the porous film may be about 1400 MPa or greater. For example, a tensile modulus of the porous film may be about 1500 MPa or greater. For example, a tensile modulus of the porous film may be about 1700 MPa or greater. For example, a tensile modulus of the porous film may be about 2000 MPa or greater. For example, a tensile modulus of the porous film may be about 2200 MPa or greater. For example, a tensile modulus of the porous film may be in a range of about 1000 MPa to about 3000 MPa. When the porous film having a tensile modulus within these ranges is included, deterioration of the separator during a charge/discharge process may be effectively prevented. When a tensile modulus of the porous film is too low, durability of the separator may deteriorate.

A porosity of the porous film may be in a range of about 10% to about 90%. For example, a porosity of the porous film may be in a range of about 20% to about 80%. For example, a porosity of the porous film may be in a range of about 30% to about 70%. For example, a porosity of the porous film may be in a range of about 35% to about 60%. For example, a porosity of the porous film may be in a range of about 40% to about 55%. For example, a porosity of the porous film may be in a range of about 40% to about 50%. When the porous film has a porosity within these ranges, the separator may sufficiently include an electrolyte, and migration of ions between electrodes may be facilitated. A porosity of the porous film may be measured by using liquid or gas adsorption methods according to the American Society for Testing and Materials (ASTM) D-2873. For example, the separator for a lithium ion battery may have a porosity of about 40%.

An air permeability of the porous film may be about 3000 sec/100cc or less. For example, an air permeability of the porous film may be about 2500 sec/100cc or less. For example, an air permeability of the porous film may be about 2000 sec/100cc or less. For example, an air permeability of the porous film may be about 1500 sec/100cc or less. For example, an air permeability of the porous film may be about 1000 sec/100cc or less. For example, an air permeability of the porous film may be about 900 sec/100cc or less. For example, an air permeability of the porous film may be about 800 sec/100cc or less. For example, an air permeability of the porous film may be about 700 sec/100cc or less. For example, an air permeability of the porous film may be about 600 sec/100cc or less. For example, an air permeability of the porous film may be in a range of about 100 sec/100cc to about 3000 sec/100cc. For example, an air permeability of the porous film may be in a range of about 200 sec/100cc to about 2000 sec/100cc. For example, an air permeability of the porous film may be in a range of about 300 sec/100cc to about 1000 secl100cc. For example, an air permeability of the porous film may be in a range of about 400 sec/100cc to about 700 sec/100cc. When the porous film has an air permeability within these ranges, a resistance of an electrolyte impregnated in the porous film may be suppressed. When it is difficult for gas to pass through the porous film due to an excessive increase in air permeability of the porous film, resistance of an electrolyte impregnated in the porous film may increase excessively, and thus, performance of a battery including the porous film may deteriorate.

Also, the porous film may have homogenous air permeability. When the porous film has homogenous air permeability, a current density in the electrolyte including the porous film is homogeneously distributed, and thus side reactions such as precipitation of crystals at an interface between an electrode and the electrolyte may be suppressed.

A contact angle of the porous film with water at 20°C may be about 60° or less. For example, a contact angle of the porous film with water at 20°C may be about 50° or less. For example, a contact angle of the porous film with water at 20°C may be about 40° or less. For example, a contact angle of the porous film with water at 20°C may be about 30° or less. For example, a contact angle of the porous film with water at 20°C may be about 20° or less. When the porous film has a low contact angle with respect to a polar solvent, such as water, the porous film may provide improved wettability with respect to an electrolyte including the polar solvent. When a contact angle of the porous film with water at 20°C is excessively large, the electrolyte may not be impregnated into the porous film. When the separator including the porous film provides improved wettability with respect to the electrolyte, the electrolyte may be homogeneously impregnated into the interface between the separator and the electrode, and thus an electrode reaction may be homogenously performed, which may result in improvement of lifespan characteristics of an electrochemical cell.

Thermal shrinkage after leaving the porous film at 150°C for 30 minutes may be about 5% or lower. For example, thermal shrinkage after leaving the porous film at 150°C for 30 minutes may be about 4.5% or lower. For example, thermal shrinkage after leaving the porous film at 150°C for 30 minutes may be about 4% or lower. For example, thermal shrinkage after leaving the porous film at 150°C for 30 minutes may be about 3.5% or lower. For example, thermal shrinkage after leaving the porous film at 150°C for 30 minutes may be about 3% or lower. For example, thermal shrinkage after leaving the porous film at 150°C for 30 minutes may be about 2.5% or lower. For example, thermal shrinkage after leaving the porous film at 150°C for 30 minutes may be about 2% or lower. For example, thermal shrinkage after leaving the porous film at 150°C for 30 minutes may be about 1.5% or lower. For example, thermal shrinkage after leaving the porous film at 150°C for 30 minutes may be about 1% or lower. When the porous film has excellent thermal stability at a high temperature of 150°C or higher, thermal resistance of an electrochemical cell including the separator may improve.

The porous film may further include at least one of a cross-linking agent and a binder. When the porous film further includes a cross-linking agent and/or a binder, a tensile strength of the separator may further improve.

The cross-linking agent may assist binding of the carboxyl-group-containing CNFs. An amount of the cross-linking agent may be in a range of about 1 part to about 50 parts by weight based on 100 parts by weight of the carboxyl-group-containing CNFs, but embodiments are not limited thereto, and any amount of the cross-linking agent that may improve physical properties of the porous film may be used. For example, an amount of the cross-linking agent may be in a range of about 1 part to about 30 parts, about 1 part to about 20 parts by weight, or about 1 part to about 15 parts by weight, based on 100 parts by weight of the carboxyl-group-containing CNFs. For example, the cross-linking agent may be at least one selected from isocyanate, polyvinyl alcohol, and polyamide epichlorohydrin (PAE), but embodiments are not limited thereto, and any material available as a cross-linking agent in the art may be used.

The binder may assist binding of the carboxyl-group-containing CNFs. An amount of the binder may be in a range of about 1 part to about 50 parts by weight based on 100 parts by weight of the carboxyl-group-containing CNFs, but embodiments are not limited thereto, and any amount of the binder that may improve physical properties of the porous film may be used. For example, an amount of the binder may be in a range of about 1 part to about 30 parts, about 1 part to about 20 parts by weight, or about 1 part to about 15 parts by weight, based on 100 parts by weight of the carboxyl-group-containing CNFs. For example, the binder may be at least one selected from cellulose single nanofiber, methyl cellulose, hydroxypropyl methylcellulose, hydroxyethyl methyl cellulose, carboxyl methyl cellulose, ethyl cellulose, polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, and polyvinylalcohol, but embodiments are not limited thereto, and any material available as a binder in the art may be used.

A thickness of the porous film may be about 200 $\mu$m or less. For example, a thickness of the porous film may be about 100 $\mu$m or less. For example, a thickness of the porous film may be about 50 $\mu$m or less. For example, a thickness of the porous film may be about 40 $\mu$m or less. For example, a thickness of the porous film may be about 35 $\mu$m or less. For example, a thickness of the porous film may be about 30 $\mu$m or less. For example, a thickness of the porous film may be about 25 $\mu$m or less. For example, a thickness of the porous film may be about 19 $\mu$m or less. For example, a thickness of the porous film may be about 18 $\mu$m or less. For example, a thickness of the porous film may be about 17 $\mu$m or less. For example, a thickness of the porous film may be about 16 $\mu$m or less. When the porous film has a high tensile strength while having a reduced thickness within these ranges, an energy density and lifespan characteristics of an electrochemical cell including a separator including the porous film may improve at the same time. A thickness of the porous film may be about 1 $\mu$m or more.

According to another embodiment, an electrochemical cell includes the separator, (e.g., the porous film or structure made from the porous film). When the electrochemical cell includes the separator having a high tensile strength as described above, lifespan characteristics of the electrochemical cell may improve.

The electrochemical cell is not particularly limited, and any material capable of saving and emitting electricity by an electrochemical reaction in the art may be used. For example, the electrochemical cell may be a primary battery or a secondary battery. For example, the electrochemical cell may be an alkali metal battery, a fuel battery, or a super capacitor. For example, the electrochemical cell may be a lithium battery or a sodium battery. For example, the electrochemical cell may be a lithium ion battery, a lithium polymer battery, a lithium sulfur battery, or a lithium air battery.

The electrochemical cell may include a cathode; an anode; and a separator disposed between the cathode and the anode.

For example, the electrochemical cell may be a lithium battery.

The lithium battery may be manufactured in the following manner.

First, an anode is prepared.

For example, an anode active material, a conducting agent, a binder, and a solvent are mixed to prepare an anode active material composition. In some embodiments, the anode active material composition may be directly coated on a metallic current collector and dried to prepare an anode plate. In some embodiments, the anode active material composition may be cast on a separate support to form an anode active material film, which may then be separated from the support and laminated on a metallic current collector to prepare an anode plate.

In some embodiments, the anode active material may be any anode active material for a lithium battery available in the art. For example, the anode active material may include at least one selected from lithium metal, a metal alloyable with lithium, a transition metal oxide, a non-transition metal oxide, and a carbonaceous material.

Examples of the metal alloyable with lithium are Si, Sn, Al, Ge, Pb, Bi, Sb, a Si-Y alloy (where Y is an alkali metal, an alkali earth metal, a Group XIII element, a Group XIV element, a transition metal, a rare earth element, or a combination thereof, and Y is not Si), and a Sn-Y alloy (where Y is an alkali metal, an alkali earth metal, a Group XIII element, a Group XIV element, a transition metal, a rare earth element, or a combination thereof, and Y is not Sn). In some embodiments, Y may be magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), titanium (Ti), germanium (Ge), phosphorus (P), arsenic (As), antimony (Sb), bismuth (Bi), sulfur (S), selenium (Se), tellurium (Te), polonium (Po), or a combination thereof.

Examples of the transition metal oxide include a lithium titanium oxide, a vanadium oxide, and a lithium vanadium oxide.

Examples of the non-transition metal oxide include $SnO_2$ and $SiO_x$ (where $0<x<2$).

Examples of the carbonaceous material are crystalline carbon, amorphous carbon, and mixtures thereof. An example of the crystalline carbon is graphite, such as natural graphite or artificial graphite, in shapeless, plate, flake, spherical, or fibrous form. Examples of the amorphous carbon are soft carbon (carbon sintered at low temperatures), hard carbon, meso-phase pitch carbides, and sintered cokes.

Examples of the conducting agent may include natural graphite, artificial graphite, carbon black, acetylene black, or Ketjen black; carbon fibers; or a metal powder or metal fibers of copper, nickel, aluminum, or silver. Also, a conducting material such as a polyphenylene derivative or a mixture including a conducting material may be used, but examples of the conducting material are not limited thereto, and any material available as a conducting material in the art may be used. Also, a crystalline material may be added as a conducting material.

Examples of the binder may include a vinylidene fluoride/hexafluoropropylene copolymer, polyvinylidene fluoride (PVDF), polyacrylonitrile, polymethyl methacrylate, polytetrafluoroethylene, and mixtures thereof, and a styrene-butadiene rubber polymer may be further used as a binder in addition to the cross-linked polymer, but embodiments are not limited thereto, and any material available as a binder in the art may be additionally used.

Examples of the solvent may include N-methylpyrrolidone, acetone, and water, but embodiments are not limited thereto, and any material available as a solvent in the art may be used.

The amounts of the anode active material, the conducting agent, the binder, and the solvent may be in ranges commonly used in lithium batteries. At least one of the conducting agent, the binder, and the solvent may be omitted according to a use and a structure of the lithium battery.

Next, a cathode may be prepared according to a cathode preparation method.

The cathode may be prepared in the same manner as the anode, except that a cathode active material is used instead of an anode active material. Also, the same conducting agent, binder, and solvent used in the preparation of the anode may be used in the preparation of a cathode active material composition.

For example, a cathode active material, a conducting agent, a binder, and a solvent may be mixed together to prepare a cathode active material composition. The cathode active material composition may be directly coated on an aluminum current collector to prepare a cathode plate. In some embodiments, the cathode active material composition may be cast on a separate support to form a cathode active material film, which may then be separated from the support and laminated on an aluminum current collector to prepare a cathode plate. The cathode is not limited to the examples described above, and may be one of a variety of types.

The cathode active material may include at least one selected from a lithium cobalt oxide, a lithium nickel cobalt manganese oxide, a lithium nickel cobalt aluminum oxide, a lithium iron phosphate, and a lithium manganese oxide, but embodiments are not limited thereto, and any material available as a cathode active material in the art may be used.

For example, the cathode active material may be a compound represented by one of the following formulae: $Li_aA_{1-b}B_bD_2$ (where $0.90 \leq a \leq 1.8$ and $0 \leq b \leq 0.5$); $Li_aE_{1-b}B_bO_{2-c}D_c$ (where $0.90 \leq a \leq 1.8$, $0 \leq b \leq 0.5$, and $0 \leq c \leq 0.05$); $LiE_{2-b}B_bO_{4-c}D_c$ (where $0 \leq b \leq 0.5$ and $0 \leq c \leq 0.05$); $Li_aNi_{1-b-c}Co_bB_cD_\alpha$ (where $0.90 \leq a \leq 1.8$, $0 \leq b \leq 0.5$, $0 \leq c \leq 0.05$, and $0 < \alpha \leq 2$); $Li_eNi_{1-b-c}Co_bB_cO_{2-\alpha}F_\alpha$ (where $0.90 \leq a \leq 1.8$, $0 \leq b \leq 0.5$, $0 \leq c \leq 0.05$, and $0 < \alpha < 2$); $Li_aNi_{1-b-c}Co_bB_cO_{2-\alpha}F_2$ (where $0.90 \leq a \leq 1.8$, $0 \leq b \leq 0.5$, $0 \leq c \leq 0.05$, and $0 < \alpha < 2$); $Li_aNi_{1-b-c}Mn_bB_cD_\alpha$ (where $0.90 \leq a \leq 1.8$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$ (where $0.90 \leq a \leq 1.8$, $0 \leq b \leq 0.5$, $0 \leq c \leq 0.05$, and $0 < \alpha < 2$); $Li_aNi_{1-b-c}Mn_bB_cO_{2-\alpha}F_2$ (where $0.90 \leq a \leq 1.8$, $0 \leq b \leq 0.5$, $0 \leq c \leq 0.05$, and $0 < \alpha < 2$); $Li_aNi_bE_cG_dO_2$ (where $0.90 \leq a \leq 1.8$, $0 \leq b \leq 0.9$, $0 \leq c \leq 0.5$, and $0.001 \leq d \leq 0.1$); $Li_aNi_bCo_cMn_dGeO_2$ (where $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMnG_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ (where $0 \leq f \leq 2$); $Li_{(3-f)}Fe_2(PO_4)_3$ (where $0 \leq f \leq 2$); and $LiFePO_4$.

In the formulae above, A may be selected from nickel (Ni), cobalt (Co), manganese (Mn), and combinations thereof; B may be selected from aluminum (Al), nickel (Ni), cobalt (Co), manganese (Mn), chromium (Cr), iron (Fe), magnesium (Mg), strontium (Sr), vanadium (V), a rare earth element, and combinations thereof; D may be selected from oxygen (O), fluorine (F), sulfur (S), phosphorus (P), and combinations thereof; E may be selected from cobalt (Co), manganese (Mn), and combinations thereof; F may be selected from fluorine (F), sulfur (S), phosphorus (P), and combinations thereof; G may be selected from aluminum (Al), chromium (Cr), manganese (Mn), iron (Fe), magnesium (Mg), lanthanum (La), cerium (Ce), strontium (Sr), vanadium (V), and combinations thereof; Q is selected from titanium (Ti), molybdenum (Mo), manganese (Mn), and combinations thereof; I is selected from chromium (Cr), vanadium (V), iron (Fe), scandium (Sc), yttrium (Y), and combinations thereof; and J may be selected from vanadium (V), chromium (Cr), manganese (Mn), cobalt (Co), nickel (Ni), copper (Cu), and combinations thereof.

The compounds listed above as cathode active materials may have a surface coating layer (hereinafter, also referred to as "coating layer"). Alternatively, a mixture of a compound without a coating layer and a compound having a coating layer, the compounds being selected from the compounds listed above, may be used. In some embodiments, the coating layer may include at least one compound of a coating element selected from the group consisting of an oxide, a hydroxide, an oxyhydroxide, an oxycarbonate, and a hydroxycarbonate of the coating element. In some embodiments, the compounds for the coating layer may be amorphous or crystalline. In some embodiments, the coating element for the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. In some embodiments, the coating layer may be formed using any method that does not adversely affect the physical properties of the cathode active material when a compound of the coating element is used. For example, the coating layer may be formed using a spray coating method or a dipping method. The coating methods may be well understood by one of ordinary skill in the art, and thus a detailed description thereof will be omitted.

In some embodiments, the cathode active material may be $LiCoO_2$, $LiMn_xO_{2x}$ (where x=1 or 2), $LiNi_{1-x}Mn_xO_{2x}$ (where $0<x<1$), $LiNi_{1-x-y}Co_xMn_yO_2$ (where $0 \leq x \leq 0.5$ and $0 \leq y \leq 0.5$), or $LiFePO_4$.

Then, the separator is disposed between the cathode and the anode.

Subsequently, an electrolyte is prepared.

In some embodiments, the electrolyte may be an organic electrolyte solution. In some embodiments, the electrolyte may be in a solid phase. Examples of the electrolyte are boron oxide and lithium oxynitride. Any material available as a solid electrolyte in the art may be used. In some embodiments, the solid electrolyte may be formed on the anode by, for example, sputtering.

In some embodiments, the organic electrolyte solution may be prepared by dissolving a lithium salt in an organic solvent.

The organic solvent may be any solvent available as an organic solvent in the art. In some embodiments, the organic solvent may be propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, $\gamma$-butyrolactone, dioxorane, 4-methyldioxorane, N,N-dimethyl formamide, dimethyl acetamide, dimethylsulfoxide, dioxane, 1,2-dimethoxyethane, sulforane, dichloroethane, chlorobenzene, nitrobenzene, diethylene glycol, dimethyl ether, or a mixture thereof.

In some embodiments, the lithium salt may be any material available as a lithium salt in the art. In some embodiments, the lithium salt may be $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein x and y are each independently a natural number), LiCl, Lil, or a mixture thereof.

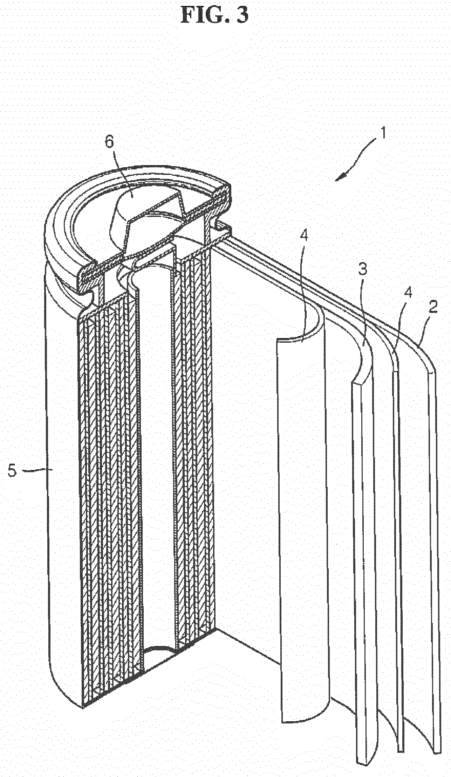

Referring to FIG. 3, a lithium battery 1 includes a cathode 3, an anode 2, and a separator 4. In some embodiments, the cathode 3, the anode 2, and the separator 4 may be wound or folded, and then sealed in a battery case 5. In some embodiments, the battery case 5 may be filled with an organic electrolytic solution and sealed with a cap assembly 6, thereby completing the manufacture of the lithium battery 1. In some embodiments, the battery case 5 may be a cylindrical type, a rectangular type, or a thin-film type. For example, the lithium battery 1 may be a thin-film type battery. In some embodiments, the lithium battery 1 may be a lithium ion battery.

In some embodiments, the separator may be disposed between the cathode and the anode to form a battery assembly. In some embodiments, the battery assembly may be stacked in a bi-cell structure and impregnated with the organic electrolytic solution. In some embodiments, the resultant assembly may be inserted into a pouch and hermetically sealed, thereby completing the manufacture of a lithium ion polymer battery.

In some embodiments, a plurality of battery assemblies may be stacked to form a battery pack, which may be used in any device that requires high capacity and high output, for example, in a laptop computer, a smartphone, or an electric vehicle.

The lithium battery may have improved lifetime characteristics and high-rate characteristics, and thus may be used in an electric vehicle (EV), for example, in a hybrid vehicle such as a plug-in hybrid electric vehicle (PHEV).

According to another embodiment, a method of preparing a separator includes fermenting a first composition including a water-soluble polymer together with a bacterium to thereby produce a second composition including carboxyl-group-containing CNFs; separating the carboxyl-group-containing CNFs from the second composition; and preparing a porous film from the separated carboxyl-group-containing CNFs.

The method of preparing a separator directly prepares carboxyl-group-containing CNFs by fermentation. As a result, carboxyl groups are evenly distributed throughout the CNFs, and the diameter of the CNFs may be reduced and uniform. Also, since the carboxyl-group-containing CNFs are prepared by fermentation, carboxyl groups may exist within the CNFs as well as on surfaces of the CNFs.

First, the second composition including the carboxyl-group-containing CNFs is prepared by fermentation of the first composition including a water-soluble polymer together with a bacterium.

The carboxyl-group-containing CNFs may be formed in a medium including a water-soluble polymer and a bacterium through fermentation when the medium is incubated. The medium may be any material that allows a bacterium to form CNFs. The medium may be Hestrin and Schramm's medium (HS medium). The HS medium may include glucose, 5 g/L of bacto-peptone, 5 g/L of a yeast extract, 2.7 g/L of $Na_2HPO_4$, and 1.15 g/L of citric acid in water. Glucose may be included in the HS medium at a concentration in a range of about 5 g/L to about 25 g/L, about 10 g/L to about 25 g/L, about 15 g/L to about 25 g/L, or about 17.5 g/L to about 22.5 g/L; or at about 20 g/L. The incubation may be performed at a temperature in a range of about 28°C to about 32°C, about 28°C to about 31.5°C, about 29°C to about 31°C, about 29.5°C to about 30.5°C, or about 29.25°C to about 30.25°C; or at about 30°C. The incubation may be performed for about 8 hours to about 10 days, about 8 hours to about 7 days, about 8 hours to about 5 days, about 1 day to about 10 days, about 1 day to about 5 days, about 1 day to about 3 days, or about 2 days to about 5 days. In one embodiment, the incubation may be performed in the HS medium at a temperature in a range of about 29.25°C to about 30.25°C or at about 30°C. The incubation may be performed for about 1 day to about 10 days. Suitable vessels for fermentation are known in the art. The incubation may be a static and agitated culturing process. For example, the incubation may produce carboxyl-group-containing CNFs having excellent physical properties through a static culturing process. Here, the bacterium may be *G.xylinus.* In one embodiment, the medium may include about 0.5 w/v% to about 2 w/v% of carboxymethylcellulose (CMC).

The water-soluble polymer may be a polymer including a carboxyl group. For example, the water-soluble polymer including a carboxyl group may be at least one selected from CMC, alginate, xanthan gum, guar gum, polyacrylate, and polymethacrylate, but embodiments are not limited thereto, and any water-soluble polymer having a carboxyl group in the art may be used.

An amount of the water-soluble polymer in the first composition may be about 0.01 w/v% to 10 w/v% based on the total volume of the first composition. For example, an amount of the water-soluble polymer may be about 5 w/v% or less based on the total volume of the first composition. For example, an amount of the water-soluble polymer may be about 3 w/v% or less based on the total volume of the first composition. For example, an amount of the water-soluble polymer may be about 2 w/v% or less based on the total volume of the first composition. In some embodiments, an amount of the water-soluble polymer may be about 0.1 w/v% or more based on the total volume of the first composition. For example, an amount of the water-soluble polymer may be about 0.5 w/v% or more based on the total volume of the first composition. For example, an amount of the water-soluble polymer may be in a range of about 0.5 w/v% to about 10 w/v% based on the total volume of the first composition. For example, an amount of the water-soluble polymer may be in a range of about 0.5 w/v% to about 5 w/v% based on the total volume of the first composition. For example, an amount of the water-soluble polymer may be in a range of about 0.5 w/v% to about 2 w/v% based on the total volume of the first composition. For example, an amount of the water-soluble polymer may be in a range of about 1 w/v% to about 2 w/v% based on the total volume of the first composition. When an amount of the water-soluble polymer is within these ranges, the carboxyl-group-containing CNFs may be prepared with high efficiency. When an amount of the water-soluble polymer is too low, binding between CNFs increases upon fibril formation, and thus the resultant CNFs in the fibrillated form may have an increased fiber diameter and decreased dispersibility. When an amount of the water-soluble polymer is too high, it may be difficult to perform a separation-purification process, and thus a manufacturing cost of the CNFs may increase.

A molecular weight of the water-soluble polymer in the first composition may be in a range of about 10,000 Daltons to about 1,000,000 Daltons. For example, a molecular weight of the water-soluble polymer in the first composition may be in a range of about 10,000 Daltons to about 500,000 Daltons. For example, a molecular weight of the water-soluble polymer in the first composition may be in a range of about 10,000 Daltons to about 300,000 Daltons. For example, a molecular weight of the water-soluble polymer in the first composition may be in a range of about 30,000 Daltons to about 300,000 Daltons. For example, a molecular weight of the water-soluble polymer in the first composition may be in a range of about 50,000 Daltons to about 300,000 Daltons. When a molecular weight of the water-soluble polymer is within these ranges, the carboxyl-group-containing CNFs may be manufactured at high efficiency. When a molecular weight of the water-soluble polymer is too low, dispersibility of the water-soluble polymer with respect to the CNFs may decrease. When a molecular weight of the water-soluble polymer is too high, viscosity may increase, and it may be difficult to perform a separation-purification process.

Next, the carboxyl-group-containing CNFs are separated from the second composition.

For example, a base may be added to the second composition and then the second composition may be heat-treated. Then, cells and impurities included in the second composition may be hydrolyzed and removed by washing to separate the purified carboxyl-group-containing CNFs.

Alternatively, the separating of the carboxyl-group-containing CNFs from the second composition may include homogenizing the second composition, with or without removing cells and impurities such as culture medium, to prepare a third composition including the carboxyl-group-containing CNFs; and separating the carboxyl-group-containing CNFs from the third composition. That is, the carboxyl-group-containing CNFs may be separated after homogenizing the second composition. Thus, the homogenizing of the second composition may be performed before removing cells and impurities such as culture medium from the second composition or after removing cells and impurities such as culture medium from the second composition.

The homogenizing of the second composition may be performed by using a high-pressure homogenizer. The high-pressure homogenizer has a microchannel, and spaces before and after the microchannel are larger than a space of the microchannel. In this regard, due to a pressure drop and high velocity shearing caused by the second composition moving through the narrow microchannel to the large space after the microchannel, the second composition receives a high velocity decelerating impact and thus is homogenized. That is, the carboxyl-group-containing CNFs may be homogenized together with the bacterium that produced the carboxyl-group-containing CNFs, and then separated from the bacterium. The separation includes processes of centrifuging or filtering the homogenizing solution to remove a supernatant or filtrate and separating the carboxyl-group-containing CNFs from a precipitate or a retentate. The separation may include destroying cells by contacting the homogenized solution with an alkali solution having a pH of, for example, about 9.0 or higher, about 9.5 or higher, about 10.0 or higher, or about 10.5 or higher, at a temperature of, for example, about 50°C or higher, about 60°C or higher, about 70°C or higher, or about 80°C or higher, about 90°C or higher, about 100°C or higher, about 110°C or higher, about 120°C or higher, about 130°C or higher, or about 150°C or higher, for example, in a range of about 50°C to about 150°C, about 60°C to about 150°C, about 70°C to about 150°C, about 80°C to about 150°C, about 90°C to about 150°C, about 100°C to about 150°C, about 110°C to about 150°C, about 120°C to about 150°C, about 110°C to about 130°C, or, for example, at about 110°C, about 120°C, about 130°C, or about 150°C.

A pressure applied to the second composition in the high-pressure homogenizer may be about 2000 bar or less. For example, a pressure applied to the second composition in the high pressure homogenizer may be about 1500 bar or less. For example, a pressure applied to the second composition in the high-pressure homogenizer may be about 1000 bar or less. For example, a pressure applied to the second composition in the high-pressure homogenizer may be about 500 bar or less. For example, a pressure applied to the second composition in the high-pressure homogenizer may be about 400 bar or less. When a pressure is within these ranges, the second composition may be effectively homogenized. When a pressure is too high, an energy cost may increase, and length loss of the CNFs may increase. A pressure applied to the second composition in the high-pressure homogenizer may be about 1 bar or more.

A number of times that the second composition passes through the high-pressure homogenizer may be 20 or less, but embodiments are not limited thereto, and a desired type of the carboxyl-group-containing CNFs may be controlled. For example, the number of times that the second composition passes through the high-pressure homogenizer may be 15 or less. For example, the number of times that the second composition passes through the high-pressure homogenizer may be 10 or less. For example, the number of times that the second composition passes through the high-pressure homogenizer may be 5 or less. For example, the number of times that the second composition passes through the high-pressure homogenizer may be 4 or less. For example, the number of times that the second composition passes through the high-pressure homogenizer may be 3 or less.

In the method of preparing the separator, a disintegrating agent of the second composition may be added before homogenizing the second composition to prepare the third composition. When the disintegrating agent of the second composition is added to the second composition, the carboxyl-group-containing CNFs included in the second composition may be effectively disintegrated.

The disintegrating agent may inhibit bonding of the CNFs and thus may prevent formation of CNF bundles. A bond between the CNFs may be a non-covalent bond such as a hydrogen bond. For example, the disintegrating agent may be water-soluble cellulose. For example, the water-soluble cellulose may be carboxymethylcellulose (CMC), 2-hydroxyethyl cellulose, water-soluble cellulose ether, or alcogum, but embodiments are not limited thereto, and any material available as a disintegrating agent in the art may be used.

An amount of the disintegrating agent may be about 10 parts by weight or greater based on 100 parts by weight of the carboxyl-group-containing CNFs included in the second composition. For example, an amount of the disintegrating agent may be in a range of about 10 parts to about 200 parts by weight, or, for example, about 30 parts to about 200 parts by weight, about 40 parts to about 200 parts by weight, about 50 parts to about 200 parts by weight, about 50 parts to about 180 parts by weight, or about 50 parts to about 170 parts by weight, based on 100 parts by weight of the carboxyl-group-containing CNFs. A molecular weight of the disintegrating agent may be in a range of about 30,000 Daltons to about 500,000 Daltons, or, for example, about 30,000 Daltons to about 300,000 Daltons, about 30,000 Daltons to about 200,000 Daltons, about 30,000 Daltons to about 100,000 Daltons, about 60,000 Daltons to about 500,000 Daltons, about 60,000 Daltons to about 300,000 Daltons, or about 60,000 Daltons to about 100,000 Daltons. For example, the disintegrating agent may be CMC having a molecular weight in a range of about 60,000 Daltons to about 500,000 Daltons.

Next, the method includes preparing a porous film from the separated carboxyl-group-containing CNFs.

The preparing of a porous film from the separated carboxyl-group-containing CNFs includes preparing a fourth composition including the separated carboxyl-group-containing CNFs and a pore-forming agent; and removing the pore-forming agent from the fourth composition to prepare a porous film.

For example, the fourth composition may include the carboxyl-group-containing CNFs, a pore-forming agent, and a solvent. First, the fourth composition is dried to remove the solvent therefrom to obtain a film. The film thus obtained is added into a solvent that is a solvent with respect to the pore-forming agent and a nonsolvent with respect to the carboxyl-group-containing CNFs to selectively remove the pore-forming agent, and thus a porous film may be formed.

A type of the pore-forming agent is not particularly limited and an organic pore-forming agent and an inorganic pore-forming agent may be used as the pore-forming agent. The organic pore-forming agent is not particularly limited, and any organic compound that is selectively dissolved in a solvent that does not dissolve the carboxyl-group-containing CNFs may be used. The organic pore-forming agent may be, for example, polyethylene glycol. The inorganic pore-forming agent may be a thermally decomposible inorganic pore-forming agent or a soluble inorganic pore-forming agent. The thermally decomposible inorganic pore-forming agent is an inorganic compound that is vaporized and removed by thermal treatment. The thermally decomposable pore-forming agent may be sodium bicarbonate ($NaHCO_3$) or ammonium bicarbonate ($NH_4HCO_3$), but embodiments are not limited thereto, and any material available as a thermally decomposable pore-forming agent in the art may be used. The soluble inorganic pore-forming agent may be, for example, a lithium salt such as $LiPF_6$ that may be used in an electrolyte of a lithium battery, but embodiments are not limited thereto, and any material available as a soluble inorganic pore-forming agent may be used. The lithium salt contacts the electrolyte of the lithium battery and is dissolved therein, thereby forming pores.

In the method of preparing a separator, the porous film prepared as the fourth composition may further include a cross-linking agent and/or a binder. The cross-linking agent and the binder included in the fourth composition are the same as the cross-linking agent and the binder included in the porous film of the separator described above.

According to another embodiment, a non-woven fabric includes carboxyl-group-containing CNFs and a porous film having a tensile strength of about 60 MPa or greater, wherein the carboxyl-group-containing cellulose nanofibers comprise a group of Formula 1 or Formula 2 bound to a carbon atom of a pyranose ring in the carboxyl-group-containing cellulose nanofibers:

Formula 1 is        -R1-O-R2-COOM

Formula 2        -O-R2-COOM

wherein R1 and R2 are each independently a substituted or unsubstituted C1-C10 alkylene group, and M is hydrogen or an alkali metal. The carboxyl-group-containing CNFs may have excellent dispersibility and a decreased diameter by including a carboxyl group in surfaces of the carboxyl-group-containing CNFs. In this regard, the porous film including the carboxyl-group-containing CNFs may have a high tensile strength of about 60 MPa or greater. The porous film in the non-woven fabric may be the same as that of the porous film included in the separator described above.

An amount of a carboxyl group of the carboxyl-group-containing CNFs in the non-woven fabric may be about 0.02 mmol/g or greater. The amount of the carboxyl-group-containing CNFs included in the non-woven fabric may be the same as that of the carboxyl-group-containing CNFs included in the separator described above.

An average diameter of the carboxyl-group-containing CNFs in the non-woven fabric may be about 45 nm or less. The average diameter of the carboxyl-group-containing CNFs included in the non-woven fabric may be the same as that of the carboxyl-group-containing CNFs included in the separator described above.

A full width at half maximum (FWHM) in a diameter distribution graph of the carboxyl-group-containing CNFs included in the non-woven fabric may be about 50 nm or less. A FWHM in the diameter distribution graph illustrating the number of CNFs according to a diameter of the carboxyl-group-containing CNFs may be about 45 nm or less. The description of a FWHM in the diameter distribution curve of the carboxyl-group-containing CNFs in the non-woven fabric is the same as that of a FWHM in the diameter distribution curve of the carboxyl-group-containing CNFs in the separator described above.

In the porous film in the non-woven fabric, a carboxyl group bound to carbons forming a pyranose ring in the carboxyl-group-containing CNFs may be represented by Formula 1 or Formula 2:

Formula 1        $-R_1-O-R_2-COOM$

Formula 2        $-O-R_2-COOM$

In Formulae 1 and 2, $R_1$ and $R_2$ are each independently a substituted or unsubstituted C1-C10 alkyl group, and M is hydrogen or an alkali metal. For example, the alkali metal may be lithium, sodium, or potassium. For example, $R_1$ and $R_2$ are each independently a methylene group. For example, the carboxyl group bound to carbons forming a pyranose ring in the carboxyl-group-containing CNFs may be $-CH_2OCH_2COONa$ or $-OCH_2COONa$. The pyranose ring may be glucopyranose.

In this regard, the carboxyl group represented by Formula 1 or Formula 2 in the carboxyl-group-containing CNFs has a detailed structure that is different from a-COOM structure of a conventional carboxyl group bound to carbons that form a pyranose ring in oxidized cellulose nanofibers obtained by a chemical oxidation reaction.

The carboxyl-group-containing CNFs in the porous film may be included at an amount in a range of about 30 wt% to about 100 wt%, or, for example, about 40 wt% to about 100 wt%, about 50 wt% to about 100 wt%, about 60 wt% to about 100 wt%, about 70 wt% to about 100 wt%, about 80 wt% to about 100 wt%, about 90 wt% to about 100 wt%, about 95 wt% to about 100 wt%, about 30 wt% to about 95 wt%, about 40 wt% to about 92 wt%, about 50 wt% to about 95 wt%, about 60 wt% to about 95 wt%, about 70 wt% to about 95 wt%, about 80 wt% to about 95 wt%, about 90 wt% to about 95 wt%, about 95 wt% to about 97.5 wt%, about 30 wt% to about 80 wt%, about 30 wt% to about 70 wt%, about 30 wt% to about 60 wt%, about 30 wt% to about 50 wt%, about 40 wt% to about 80 wt%, about 40 wt% to about 70 wt%, about 40 wt% to about 60 wt%, about 50 wt% to about 80 wt%, or about 50 wt% to about 90 wt%, based on a weight of the porous film.

Carboxyl-group-containing cellulose of the carboxyl-group-containing CNFs in the porous film included in the non-woven fabric may be carboxyl-group-containing microbial cellulose (or bacterial cellulose). That is, the carboxyl-group-containing microbial CNFs result from fermentation of a culture solution including a bacterium and may be directly obtained from the culture solution including a bacterium. Therefore, the carboxyl-group-containing microbial CNFs in the porous film are different from a simple mixture of conventional microbial CNFs and a carboxyl-group-containing compound.

The microbial CNFs and culturing of the microbial CNFs are the same as in the case of the separator described above.

The porous film included in the non-woven fabric may further include conventional CNFs in addition to the carboxyl-group-containing CNFs. For example, the porous film may further include wooden CNFs, but embodiments are not limited to the wooden CNFs, and any CNFs capable of improving a tensile strength of the non-woven fabric and available as CNFs in the art may be used. An amount of the conventional CNFs may be in a range of about 1% to about 40%, about 1% to about 30%, about 1% to about 20%, about 1% to about 10%, about 5% to about 40%, about 5% to about 30%, about 5% to about 20%, about 3% to about 10%, or about 5% to about 10%, based on a total weight of the carboxyl-group-containing CNFs.

A tensile modulus of the porous film included in the non-woven fabric may be about 1000 MPa or greater. The description of a tensile modulus of the porous film included in the non-woven fabric is the same as that of the porous film included in the separator described above.

A porosity of the porous film included in the non-woven fabric may be in a range of about 10% to about 90%. The description of a porosity of the porous film included in the non-woven fabric is the same as that of the porous film included in the separator described above.

An air permeability of the porous film included in the non-woven fabric may be about 3000 sec/100cc or less. The description of the air permeability of the porous film included in the non-woven fabric is the same as that of the porous film included in the separator described above.

A contact angle of the porous film with water at 20°C may be about 60° or less. The description of the contact angle of the porous film included in the non-woven fabric is the same as that of the porous film included in the separator described above.

Thermal shrinkage after leaving the porous film included in the non-woven fabric at 150°C for 30 minutes is about 5% or lower. The description of the thermal shrinkage after leaving the porous film included in the non-woven fabric at 150°C for 30 minutes is the same as that of the porous film included in the separator described above.

The porous film included in the non-woven fabric may further include at least one selected from a cross-linking agent and a binder. When the porous film further includes a cross-linking agent and/or a binder, a tensile strength of the non-woven fabric may further improve.

The non-woven fabric may be used for various purposes. For example, the non-woven fabric may be used as an air filter, a liquid filter, a metal ion filter, an absorbent, a composite material, a speaker, or a heat insulating material, but embodiments are not limited thereto, and the non-woven fabric may be used in any field that needs non-woven fabric.

According to another embodiment, a method of producing CNFs including a carboxyl group includes culturing a bacterium of the genus *Gluconacetobacter* in a medium including a CMC to form CNFs including a carboxyl group; and separating the CNFs including a carboxyl group. The CNFs including a carboxyl group may have a tensile strength of about 60 MPa or greater. The culturing of the bacterium may be performed as disclosed above. For example, the bacterium of the genus *Gluconacetobacter* may be *G.xylinus.* An amount of the CMC in the medium may be in a range of about 1 w/v% to about 2 w/v%. A temperature of the culturing may be in a range of about 29.5°C to about 30.5°C. The medium may be an HS medium.

Hereinafter, embodiments will be described in more detail with reference to Examples. However, these Examples are provided for illustrative purposes only, and the scope of the embodiments is not intended to be limited by these Examples.

(Preparation of cellulose nanofibers)

Example 1: CMC 250kDa+ general homoaenization, F1

(Production of microbial cellulose)

A wild-type *Gluconacetobacter xylinum* strain (KCCM 41431) was added to a 700 ml of Hestrin-Schramm (HS) medium in a 1L-fermenter (GX LiFlus Series Jar type Open-type system, available from Hanil Science Industrial, maintaining a positive pressure for prevention of contamination), the HS medium including 1.0 w/v% of CMC (Na-CMC, available from SIGMA) having a molecular weight of 250 kDa. Then, the medium was agitated and incubated by using an impeller at a rate of 200 rpm at 30°C for 48 hours. The HS medium included 20 g/L of glucose, 5 g/L of bacto-peptone, 5 g/L of a yeast extract, 2.7 g/L of $Na_2HPO_4$, and 1.15 g/L of citric acid in water.

A fermentation solution in which the carboxyl-group-containing CNFs produced as the result of the culturing were homogenously dispersed, for example, in the form of a paste, was collected, washed with distilled water 3 times, and heated in a 2% NaOH aqueous solution for 15 minutes at 121°C to hydrolyze cells and impurities existing between the carboxyl-group-containing CNFs, and the resultant was washed with distilled water to obtain purified carboxyl-group-containing CNFs. The purified carboxyl-group-containing CNFs were mixed with water to prepare 0.5 wt% of a suspension of carboxyl-group-containing CNFs. The suspension thus produced was homogenized by using a general homogenizer (Homogenizer HG-15A, available from Daehan Science, Republic of Korea) to prepare 500 mL of a suspension having 0.5 wt% (w/w) of the homogenized carboxyl-group-containing CNFs.

The prepared carboxyl-group-containing CNFs had an average diameter of about 18 nm, an amount of carboxyl groups of about 0.04 mmol/g, and a weight-average degree of polymerization of about 6317 DPw.

Example 2: CMC 90 kDa+ general homogenization, F2

(Production of microbial cellulose)

A suspension of carboxyl-group-containing CNFs was prepared in the same manner as in Example 1, except that 1.0 w/v% of CMC having a molecular weight of 90 kDa was used instead of 1.0 w/v% of CMC having a molecular weight of 250 kDa.

The prepared carboxyl-group-containing CNFs had an average diameter of about 23 nm, an amount of carboxyl groups of about 0.07 mmol/g, and a weight-average degree of polymerization of about 6637 DPw.

Example 3: CMC 90 kDa+ general homogenization

(Production of microbial cellulose)

A suspension of carboxyl-group-containing CNFs was prepared in the same manner as in Example 2, except that 2.0 w/v% of CMC having a molecular weight of 90 kDa was used instead of 1.0 w/v% of CMC having a molecular weight of 90 kDa.

The prepared carboxyl-group-containing CNFs had an average diameter of about 18 nm, an amount of carboxyl groups of about 0.16 mmol/g, and a weight-average degree of polymerization of about 4645 DPw.

Example 4: CMC 90 kDa+ general homogenization, F3

(Production of microbial cellulose)

A wild-type *Gluconacetobacter xylinum* strain was added to a 700 ml of Hestrin-Schramm (HS) medium in a 1L-fermenter, the HS medium including 1.0 w/v% of CMC. Then, the medium was agitated and incubated at 30°C for 48 hours. The HS medium included 20 g/L of glucose, 5 g/L of bacto-peptone, 5 g/L of a yeast extract, 2.7 g/L of $Na_2HPO_4$, and 1.15 g/L of citric acid in water. A molecular weight of CMC was 90 kDa.

(Defibration of microbial cellulose)

A fermentation solution including the carboxyl-group-containing CNFs produced as the result of the incubation was homogenized by using a general homogenizer (Homogenizer HG-15A, available from Daehan Science, Republic of Korea). Then, the homogenized fermentation solution was passed through a microchannel (size 200 μm, Interaction chamber) of a nano disperser (ISA-NH500, Ilsinautoclave, Republic of Korea) while a pressure of about 300 bar was applied thereto to obtain a fermentation solution including high-pressure homogenized carboxyl-group-containing CNFs, The fermentation solution including the high-pressure homogenized carboxyl-group-containing CNFs was centrifuged to obtain a cellulose precipitate. The precipitate was heated for 15 minutes in 2% NaOH aqueous solution at 121°C to hydrolyze cells and impurities existing between the carboxyl-group-containing CNFs, and the resultant was washed with distilled water to obtain purified carboxyl-group-containing CNFs. Spaces before and after the microchannel are larger than a space of the microchannel. In this regard, due to a pressure drop and high velocity shearing caused by the fermentation solution moving through the narrow microchannel to the spaces after the microchannel, the fermentation solution received a high velocity decelerating impact and thus was homogenized.

The prepared carboxyl-group-containing CNFs had an average diameter of about 18 nm, an amount of carboxyl groups of about 0.11 mmol/g, and a weight-average degree of polymerization of about 5531 DPw.

Comparative Example 1: No CMC + high-pressure homogenization

(Production of microbial cellulose)

Microbial cellulose was prepared in the same manner as in Example 3, except that CMC was not added.

(Defibration of microbial cellulose)

Carboxyl-group-containing CNFs were prepared by defibrating microbial cellulose in the same manner as in Example 3, except that a pressure of the high-pressure homogenizer was changed from 300 bar to 1500 bar.

The prepared carboxyl-group-containing CNFs had an average diameter of about 48 nm, an amount of carboxyl groups of about 0 mmol/g, and a weight-average degree of polymerization of about 6847 DPw.

Comparative Example 2: Mechanically defibrated wooden CNFs

Commercially available wooden cellulose nanofibers (CNFs) (available from Sugino) were used as they were.

The CNFs had an average diameter of about 56 nm, an amount of carboxyl groups of about 0 mmol/g, and a weight-average degree of polymerization of about 2020 DPw.

Comparative Example 3: Oxidized microbial cellulose nanofibers

(Production of microbial cellulose)

A wild-type *Gluconacetobacter xylinum* strain was added to a 700 ml of Hestrin-Schramm (HS) medium and incubated at 30°C for 48 hours. The HS medium included 20 g/L of glucose, 5 g/L of bacto-peptone, 5 g/L of a yeast extract, 2.7 g/L of $Na_2HPO_4$, and 1.15 g/L of citric acid in water.

A cellulose pellicle produced as the result of the incubation was collected, washed with distilled water 3 times, and heated in a 2% NaOH aqueous solution at 121°C to hydrolyze cells and impurities existing in the cellulose pellicle. Then, the resultant was washed with distilled water to obtain a purified cellulose pellicle. The purified cellulose pellicle was cut into an appropriate size, mixed with water, and then pre-homogenized by using a general homogenizer (Homogenizer HG-15A, available from Daehan Science, Republic of Korea) to prepare 500 mL of 0.5 wt% of a cellulose suspension.

(Defibration of microbial cellulose)

The produced cellulose pellicle suspension was passed through a microchannel (size 200 $\mu$m, Interaction chamber) of a nano disperser (ISA-NH500, IIsinautoclave, Republic of Korea) while a pressure of about 1500 bar was applied thereto to obtain a dispersion of cellulose nanofibers (CNFs) in the form of a slurry. The dispersion of CNFs thus obtained passed through the microchannel and was centrifuged to remove water, thereby obtaining a concentrated dispersion of CNFs.

(Oxidation of CNFs)

The defibrated CNFs were oxidized by using 2,2,6,6-tetramethylpiperidine-1-oxyl radical (TEMPO) to increase dispersibility. The oxidation was performed according to a method described in Satio (Biomacromolecules, 2007, 8(8), pp.2485-24791). In particular, 1 g of the CNFs were suspended in 100 mL of water including 0.016 g (0.1 mmol) of TEMPO and 0.1 g (1 mmol) of NaBr. 12% of NaClO solution (pH 10) was added to the dispersion of CNFs so that a concentration of the CNFs was 5.0 mmol per gram, and the dispersion was stirred at room temperature at a rate of 500 rpm to allow the contents to react for 3 hours. While the contents were reacting, 0.5 M of NaOH was added to maintain the pH at 10.0, and when the pH remained unchanged, the reaction was terminated. The obtained mixture was centrifuged and washed with water 3 to 5 times. As a result, TEMPO-oxidized cellulose, that is, a dispersion of CNFs with -COONa introduced on a surface thereof and having high dispersibility was obtained.

The oxidized CNFs thus prepared had an average diameter of about 34 nm, an amount of carboxyl groups of about 1.4 mmol/g, and a weight-average degree of polymerization of about 5329 DPw.

Comparative Example 4: CMC 90 kDa+ general homogenization

(Production of microbial cellulose)

A suspension of carboxyl-group-containing CNFs was prepared in the same manner as in Example 2, except that 0.05 w/v% of CMC having a molecular weight of 90 kDa was used instead of 1.0 w/v% of CMC having a molecular weight of 90 kDa.

The prepared carboxyl-group-containing CNFs had an average diameter of about 52 nm, an amount of carboxyl groups of about 0.006 mmol/g, and a weight-average degree of polymerization of about 6932 DPw.

Comparative Example 5: CMC 90 kDa+ general homogenization

(Production of microbial cellulose)

A suspension of carboxyl-group-containing CNFs was prepared in the same manner as in Example 2, except that 0.1 w/v% of CMC having a molecular weight of 90 kDa was used instead of 1.0 w/v% of CMC having a molecular weight of 90 kDa.
The prepared carboxyl-group-containing CNFs had an average diameter of about 46 nm, an amount of carboxyl groups of about 0.01 mmol/g, and a weight-average degree of polymerization of about 6482 DPw.

Comparative Example 6: CMC 90 kDa+ general homogenization

(Production of microbial cellulose)

A suspension of carboxyl-group-containing CNFs was prepared in the same manner as in Example 2, except that 0.2 w/v% of CMC having a molecular weight of 90 kDa was used instead of 1.0 w/v% of CMC having a molecular weight of 90 kDa.
The prepared carboxyl-group-containing CNFs had an average diameter of about 35 nm, an amount of carboxyl groups of about 0.014 mmol/g, and a weight-average degree of polymerization of about 5756 DPw.

Comparative Example 7: CMC 90 kDa+ general homogenization

(Production of microbial cellulose)

A suspension of carboxyl-group-containing CNFs was prepared in the same manner as in Example 2, except that 0.3 w/v% of CMC having a molecular weight of 90 kDa was used instead of 1.0 w/v% of CMC having a molecular weight of 90 kDa.
The prepared carboxyl-group-containing CNFs had an average diameter of about 28 nm, an amount of carboxyl groups of about 0.018 mmol/g, and a weight-average degree of polymerization of about 4923 DPw.

(Preparation of non-woven fabric and separator)

Example 5

0.423 g of polyethylene glycol (PEG, having a number-average molecular weight of about 1,000) as a pore-forming agent was added to 30 mL of the dispersion of carboxyl-group-containing CNFs prepared in Example 1 at a concentration of 0.5 wt% through dilution with water, and then stirred at room temperature for 1 hour at a rate of 1000 rpm. 13.8 mL of the dispersion thus obtained was poured into a petri dish having a diameter of 50 cm, left at 90°C for 2 hours to remove water by drying, and thus a carboxyl-group-containing CNF film was obtained. The carboxyl-group-containing CNF film was impregnated with toluene, washed 4 to 5 times to remove polyethylene glycol therefrom, and left at room temperature for 3 to 4 hours to dry, thereby obtaining a porous film. Since the porous film was not woven, the porous film was non-woven fabric.
A force of 5 MPa was applied to the porous film in the form of non-woven fabric for 10 minutes by using a hot press (Model 12-12H, available from Carver Inc.) to prepare a separator in the form of pressed non-woven fabric.

Examples 6 to 8

Non-woven fabric and separators were prepared in the same manner as in Example 5, except that the carboxyl-group-containing CNFs prepared in each of Examples 2 to 4 were used instead of the carboxyl-group-containing CNFs prepared in Example 1.

Comparative Examples 8 to 14

Non-woven fabric and separators were prepared in the same manner as in Example 5, except that the CNFs prepared in each of Comparative Examples 1 to 7 were used instead of the carboxyl-group-containing CNFs prepared in Example 1.

Comparative Example 15

A commercially available 2320 separator (Celgard™ #2320, a PP/PE/PP triple-filmed separator, available from Asahi Kasei) was used as it was.

(Manufacture of lithium battery)

Example 9

(Preparation of cathode)

A mixture including $LiNi_{0.6}Co_{0.2}Al_{0.2}O_2$ as a cathode active material, Denka Black as a carbonaceous material, and polyvinylidenefluoride (PVdF) at a weight ratio of 94:3:3 was mixed with N-methylpyrrolidone (NMP) in an Agate mortar to prepare a cathode active material slurry. The cathode active material slurry was coated on an aluminum current collector having a thickness of 15 $\mu$m by using a doctor blade at a thickness of about 40 $\mu$m, dried at room temperature, dried again in a vacuum at 120°C, and roll-pressed to prepare a cathode having a cathode active material layer on the current collector.

(Preparation of anode)

Graphite particles having an average diameter of 25 $\mu$m, a styrene-butadiene rubber (SBR) binder (available from ZEON), and CMC (available from NIPPON A&L) were mixed at a weight ratio of 97:1.5:1.5, added to distilled water, and stirred by using a mechanical stirrer for 60 minutes to prepare an anode active material slurry. The anode active material slurry was coated on a copper current collector having a thickness of 10 $\mu$m by using a doctor blade at a thickness of about 60 $\mu$m, dried in a hot-air drier at a temperature of 100°C for 0.5 hour, dried again in a vaccum at 120°C for 4 hours, and roll-pressed to prepare an anode plate.

(Manufacture of lithium battery)

The separator prepared in Example 8 was disposed between the cathode and the anode, and the resultant was disposed in a pouch. An electrolyte solution was injected into the pouch, and the pouch was sealed to manufacture a pouch cell.
The electrolyte solution was prepared by dissolving 1.15 M $LiPF_6$ in a solvent mixture including ethylene carbonate (EC): ethylmethyl carbonate (EMC): dimethylcarbonate (DMC) at a volume ratio of 2:2:6.

Comparative Example 16

A pouch cell was manufactured in the same manner as in Example 9, except that the separator prepared in Comparative Example 15 was used instead of the separator prepared in Example 8.

Evaluation Example 1: Measurement of existence of carboxyl group

IR spectrums of the CNFs prepared in Example 1 and Comparative Example 1 were obtained to evaluate whether carboxyl groups were contained therein or not.
The CNFs of Example 1 had a peak about 1572 $cm^{-1}$ corresponding to carboxyl groups and thus existence of carboxyl groups in the CNFs was confirmed.
On the other hand, such a peak was not observed in the IR spectrum of the CNFs of Comparative Example 1.

Evaluation Example 2: Measurement of amount of carboxyl groups

An amount of carboxyl groups in the CNFs prepared in each of Examples 1 to 4 and Comparative Examples 1 to 7 was measured, and the results are shown in Table 1. The amount of carboxyl groups may be measured by an electric conductivity titration method or an ion chromatography method, but accuracy of the results was increased by combining the two methods.

1. Electric conductivity titration

The amount of the carboxyl group was measured by using electric conductivity titration(or Conductometric titration) (Metrohm). 0.05 g of the freeze-dried CNFs prepared in Examples 1 to 4 and Comparative Examples 1 to 3, 27 mL of distilled water, and 3 mL of 0.01 M NaCl were added to a 100 mL-beaker, and a pH of the mixture was controlled to 3 or lower by using 0.1 M HCl. Subsequently, 0.04 M of NaOH solution was added dropwise to the beaker at 0.2 mL at a time until pH of the mixture reached 10.5, and the amount of carboxyl groups was calculated according to Equation 1 using a curve of conductivity and pH. The results of the measurement are shown in Table 1.

Equation 1

$$\text{Amount of carboxyl groups (mmol/g)} = [0.04\ M \times \text{dropwise added NaOH volume (mL)}] / 0.05\ g$$

2. Ion chromatography

5 mL of 12 mM HCl was added to 0.015 g of the freeze-dried CNFs prepared in Examples 1 to 4 and Comparative Examples 1 to 3, and the mixture was sonicated for 1 hour. After leaving the resultant at room temperature for 15 hours, an amount of $Na^+$ was analyzed by ion chromatography, and an amount of carboxyl groups was calculated by using the amount of $Na^+$.

Equation 2

$$\text{Amount of carboxyl groups (mmol/g)} = [\text{mmol of } Na^+] / 0.015\ g$$

Evaluation Example 2: Measurement of average diameter of CNFs

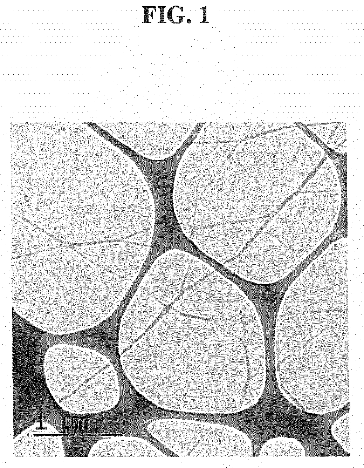

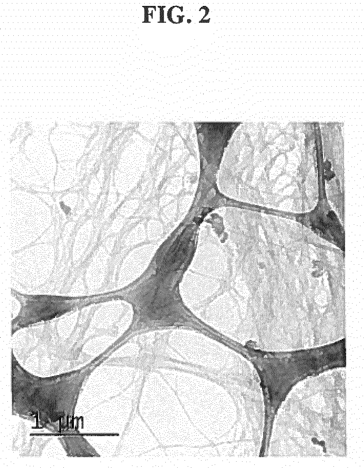

A diameter of the CNFs prepared in Examples 1 to 4 and Comparative Examples 1 to 3 was obtained by obtaining several images of an appropriately diluted CNF solution using a transmission electron microscope (TEM, Super TEM, available from Titan Cubed), measuring diameters and lengths of 100 CNFs from the images by using an image analyzer, and calculating an average diameter and an average length. Also, a FWHM of the average diameter was calculated from a diameter distribution graph showing an amount of cellulose according to the diameters of the 100 CNFs. Some of the measurement results are shown in Table 1 and FIGS. 1 and 2.

Evaluation Example 3: Measurement of weight-average degree of polymerization of CNFs

A degree of polymerization (DP) of the CNFs prepared in Examples 1 to 4 and Comparative Examples 1 to 3 was calculated by using a degree of polymerization determined by viscosity measurement (DPv) and a weight-average degree of polymerization (DPw).

In order to obtain DPw, 5 mg of the freeze-dried CNFs, 10 ml of pyridine, and 1 ml of phenyl isocyanate were added to a 12 ml-vial, and the contents underwent derivatization at 100°C for 48 hours. 2 ml of methanol was added to the sample, and the sample was washed with 100 ml of 70% methanol twice and 50 ml of $H_2O$ twice. Then, a molecular weight, molecular weight distribution, and length distribution of the CNFs were measured by using gel permeation chromatography (GPC). The GPC used a Waters 2414 refractive index detector and a Waters Alliance e2695 separation module (available from Milford, MA, USA) equipped with 3 columns, i.e., Styragel HR2, HR4, and HMW7. Chloroform was used as an eluent at a flow rate of 1.0 mL/min. A concentration of the sample was 1 mg/mL, and an injection volume was 20 ul. Polystyrene standards (PS, #140) were used as a reference. Some of the measurement results are shown in Table 1.

[Table 1]

| | Amount of carboxyl groups [mmol/g] | Average diameter [mm] | FWHM [nm] | Weight-average degree of polymerization [PDw] |
|---|---|---|---|---|
| Example 1 (F1) | 0.04 | 18 | 30 | 6317 |
| Example 2 (F2) | 0.07 | 23 | 45 | 6673 |
| Example 3 | 0.16 | 18 | 28 | 4645 |

(continued)

|  | Amount of carboxyl groups [mmol/g] | Average diameter [mm] | FWHM [nm] | Weight-average degree of polymerization [PDw] |
|---|---|---|---|---|
| Example 4 (F3) | 0.11 | 18 | 23 | 5531 |
| Comparative Example 1 | 0 | 48 | 80 | 6847 |
| Comparative Example 2 | 0 | 56 | 92 | 2020 |
| Comparative Example 3 | 1.4 | 34 | 72 | 5329 |
| Comparative Example 4 | 0.006 | 52 | - | 6932 |
| Comparative Example 5 | 0.01 | 46 | - | 6482 |
| Comparative Example 6 | 0.014 | 35 | - | 5756 |
| Comparative Example 7 | 0.018 | 28 | - | 4923 |

As shown in Table 1, diameters of the carboxyl-group-containing CNFs of Examples 1 to 4 decreased as compared with those of the CNFs of Comparative Examples 1 to 3 not including a carboxyl group.

Also, a FWHM of the carboxyl-group-containing CNFs of Example 2 of the diameter distribution curve was decreased as compared with that of the CNFs of Comparative Example 1, and thus the diameter of the CNFs were uniform.

The carboxyl-group-containing cellulose of Comparative Examples 4 to 7 had an amount of carboxyl groups of less than 0.02 mmol/g.

Evaluation Example 4: Measurement of tensile characteristics of separator

Regarding the separator samples (having an area of 15 mm x 50 mm) prepared in Examples 5 to 8 and Comparative Examples 6 to 10, a tensile modulus and a tensile strength, which is stress at rupture, were measured in a stress-strain curve obtained by stretching the sample at a rate of 5 mm/min using a texture analyzer (TA.XT plus, Stable Micro Systems). Some of the measurement results are shown in Table 2.

Evaluation Example 5: Measurement of physical properties of separator

Thicknesses, porosities, and air permeabilities of the separator samples (having an area of 15 mm x 50 mm) prepared in Examples 5 to 8 and Comparative Examples 6 to 10 were measured.

The porosity of the separator was calculated according to Equation 1 by using a weight measurement method. In Equation 3, 1.6 $g/cm^3$ shows a density of cellulose fiber.

The air permeability of the separator was measured by using a permeability testing device (G-B3, available from TOYOSEKI). The air permeability was shown by measuring a Gurley value. The Gurley value is a time (sec) value at which 100 cc of air permeated a separator and is a standard commonly used in quantitative analysis of a pore structure of a separator. When pores of the separator are well formed, air permeation may be facilitated and thus may result in a low Gurley value.

Equation 3

$$\text{Porosity (\%)} = [1-\{(\text{weight of sample (g)})/(\text{volume of sample (cm}^3))\times 1.6 \text{ (g/cm}^3)\}]\times 100$$

Some of the measurement results are shown in Table 2.

Evaluation Example 6: Measurement of wettability of separator

Regarding the separator samples (having an area of 15 mm x 50 mm) prepared in Examples 5, 6, and 8 and Comparative Examples 8 to 15, 1 drop of water was applied to a surface of the separator at 20°C, and a contact angle formed by the surface of the separator and the water drop was measured by using an optical contact measuring device (DSA100S, available from Kruss). Some of the measurement results are shown in Table 2.

Evaluation Example 7: Measurement of thermal shrinkage of separator

The separator samples (having an area of 15 mm x 50 mm) prepared in Examples 5, 6, and 8 and Comparative Examples 8 to 15 were exposed to a temperature of 150°C for 30 minutes. Thicknesses of the separators before and after exposure at 150°C were measured to calculate thermal shrinkage. The thermal shrinkage was calculated according to Equation 4. Some of the measurement results are shown in Table 2.

Equation 4

$$\text{Thermal shrinkage (\%)} = [(\text{thickness of separator before exposure} - \text{thickness of separator after exposure}) / \text{thickness of separator before exposure}] \times 100$$

[Table 2]

|  | Tensile strength [MPa] | Tensile modulus [MPa] | Thickness [$\mu$m] | Porosity [%] | Air permeability [sec/100cc] | Contact angle [degree] | Thermal shrinkage [%] |
|---|---|---|---|---|---|---|---|
| Example 5 (F1) | 126 | 1798 | 16 | 39 | 2755 | 16 | 0 |
| Example 6 (F2) | 169 | 2412 | 11 | 44 | 1016 | - | - |
| Example 8 (F3) | 177 | 2526 | 12 | 50 | 563 | - | - |
| Comparative Example 8 | 33 | 330 | 20 | 49 | 360 | - | - |
| Comparative Example 9 | 37 | 247 | 24 | 85 | 85 | - | - |
| Comparative Example 10 | 56 | 800 | 20 | 51 | 350 | - | - |
| Comparative Example 11 | 33 | 650 | - | - | - | - | - |
| Comparative Example 12 | 42 | 681 | - | - | - | - | - |
| Comparative Example 13 | 49 | 702 | - | - | - | - | - |
| Comparative Example 14 | 53 | 867 | - | - | - | - | - |
| Comparative Example 15 | 173 | 678 | 20 | 40 | 540 | 89 | > 20, melting |

As shown in Table 2, tensile strengths of the separators of Examples 5, 6, and 8 were significantly improved as compared with those of the separators prepared in Comparative Examples 8 to 10 by using conventional CNFs.

Although the separators prepared in Comparative Examples 11 to 14 were separators including carboxyl-group-containing CNFs, an amount of carboxyl groups was as low as less than 0.02 mmol/g, and a tensile strength of the separators was less than 60 MPa.

Also, the separator of Example 8 that underwent a high-pressure homogenization process had a further increased tensile strength as compared with that of each of the separators of Examples 5 and 6.

Tensile strengths of the separators of Examples 5, 6, and 8 were similar to that of a conventional hydrocarbon-based separator of Comparative Example 15.

Also, a contact angle of the separator of Example 5 with respect to water at 20°C, which is a polar solvent, significantly decreased as compared with that of the conventional hydrocarbon-based separator of Comparative Example 15, and thus it showed that wettability to an electrolyte solution including a polar solvent of the separator of Example 5 significantly improved.

Although the separator of Example 5 exhibited no thermal shrinkage after exposure to a high-temperature environment, the hydrocarbon-based separator of Comparative Example 15 underwent significantly high thermal shrinkage of 20% or greater and melted.

Evaluation Example 8: Charge/discharge characteristics evaluation

The lithium batteries (coin cells) prepared in Example 9 and Comparative Example 16 were charged with a constant current of a 0.1 C rate at 25°C until a voltage reached 4.2 V (vs. Li), and charged with a constant voltage while maintaining 4.2 V until a current was 0.01 C. After completing the charging process, the lithium batteries were rested for 10 minutes and then discharged with a constant current of 0.1 C until a voltage of 2.8 V (vs. Li) was reached during a discharge process (1st cycle).

The batteries were then charged with a constant current at a 0.2 C rate until a voltage reached 4.2 V (vs. Li), and charged with a constant voltage while maintaining 4.2 V until a current reached 0.01 C. After completing the charging process, the lithium batteries were rested for 10 minutes and then discharged with a constant current of 0.2 C until a voltage reached 2.8 V (vs. Li) during a discharge process (2nd cycle) (1st and 2nd cycles are a formation process).

The coin cells that underwent formation were charged with a constant current at a 1.0 C rate at 25°C until a voltage of 4.2 V (vs. Li) was reached, and charged with a constant voltage while maintaining 4.2 V until a current reached 0.01 C. After completing the charging process, the lithium batteries were rested for 10 minutes and then discharged with a constant current of 1.0 C until a voltage reached 2.8 V (vs. Li) during a discharge process. This cycle was repeated 300 times. Some of the charge/discharge test results are shown in Table 3.

An initial efficiency and a capacity retention rate were calculated according to Equations 5 and 6.

Equation 5

$$\text{Initial efficiency [\%]} = [\text{discharge capacity after 1}^{st}\text{ cycle / charge capacity after 1}^{st}\text{ cycle}] \times 100$$

Equation 6

$$\text{Capacity retention rate [\%]} = [\text{discharge capacity after 300}^{th}\text{ cycle / discharge capacity after 1}^{st}\text{ cycle}] \times 100$$

[Table 3]

|  | Initial efficiency [%] | Capacity retention rate [%] |
|---|---|---|
| Example 9 (F3) | 85 | 79 |
| Comparative Example 16 (Celgard™ # 2320) | 84 | 68 |

As shown in Table 3, the lithium battery of Example 9 including the separator of Example 5 had improved initial efficiency and lifespan characteristics as compared with those of the lithium battery of Comparative Example 16 including the separator of Comparative Example 15.

As described above, according to one or more embodiments, when carboxyl-group-containing CNFs are included, a tensile strength and thermal stability of a separator may improve, and lifespan characteristics of a lithium battery including the separator may improve.

It should be understood that embodiments described herein should be considered in a descriptive sense only and not for purposes of limitation. Descriptions of features or aspects within each embodiment should typically be considered as available for other similar features or aspects in other embodiments.

**Claims**

1. A separator comprising
   a porous film having a tensile strength of about 60 MPa or greater, the porous film comprising carboxyl-group-containing cellulose nanofibers,
   wherein the carboxyl-group-containing cellulose nanofibers comprise a group of Formula 1 or Formula 2 bound to a carbon atom of a pyranose ring in the carboxyl-group-containing cellulose nanofibers:

   Formula 1 is $\qquad$ $-R_1-O-R_2-COOM$

   Formula 2 $\qquad$ $-O-R_2-COOM$

   wherein $R_1$ and $R_2$ are each independently a substituted or unsubstituted C1-C10 alkylene group, and M is hydrogen or an alkali metal, and wherein the tensile strength is measured according to the description.

2. The separator of claim 1, wherein the carboxyl-group-containing cellulose nanofibers comprise carboxyl groups in an amount of about 0.02 mmol/g or greater; and/or
   wherein an average diameter of the carboxyl-group-containing cellulose nanofibers is about 45 nm or less, the average diameter being measured according to the description; and/or wherein a full width at half maximum (FWHM) in a diameter distribution graph of the carboxyl-group-containing cellulose nanofibers is about 50 nm or less.

3. The separator of claim 1 or 2, wherein the carboxyl-group-containing cellulose nanofibers comprise microbial cellulose; preferably
   wherein the carboxyl-group-containing microbial cellulose has an absorption peak near 1572cm$^{-1}$ in an IR spectrum.

4. The separator of any one of claims 1 to 3, wherein the porous film further comprises wood cellulose nanofibers.

5. The separator of any one of claims 1 to 4, wherein the porous film has a tensile modulus of about 1000 MPa or greater; and/or
   wherein porous film has a porosity of about 10% to about 90%; and/or
   wherein the porous film has an air permeability of about 3000 seconds/100 cc or less; and/or
   wherein the porous film has a contact angle with water at 20°C of about 60° or less; and/or
   wherein thermal shrinkage of the porous film after incubating the porous film at 150°C for 30 minutes is about 5% or lower, and wherein the tensile modulus, the air permeability, the contact angle and the thermal shrinkage are measured according to the description.

6. The separator of any one of claims 1 to 5, wherein the porous film further comprises at least one selected from a cross-linking agent and a binder.

7. An electrochemical cell comprising the separator of any one of claims 1 to 6.

8. A method of preparing a separator, the method comprising:

   fermenting a first composition comprising a water-soluble polymer and bacteria to produce a second composition comprising carboxyl-group-containing cellulose nanofibers;
   separating the carboxyl-group-containing cellulose nanofibers from the second composition; and
   preparing a porous film from the separated carboxyl-group-containing cellulose nanofibers.

9. The method of claim 8, wherein the bacteria is *Komagataeibacter,* and the first composition is fermented at a temperature of about 28°C to about 31.5°C; and/or
   wherein the bacteria is *Komagataeibacter,* and \the first composition is fermented in a Hestrin-Schramm (HS) medium; and/or

wherein the bacteria is *Komagataeibacter xylinus;* and/or

wherein the water-soluble polymer is a polymer comprising a carboxyl group; and/or

wherein the water-soluble polymer comprises carboxymethylcellulose (CMC), alginate, xanthan gum, guar gum, polyacrylate, polymethacrylate, or a combination thereof; and/or

wherein the first composition comprises about 10 w/v% or less of the water soluble polymer based on a total volume of the first composition; and/or

wherein the water-soluble polymer has a molecular weight of about 10,000 Daltons to about 1,000,000 Daltons.

10. The method of claim 8, wherein the separating of the carboxyl-group-containing cellulose nanofibers from the second composition comprises

homogenizing the second composition, with or without removing bacteria and culture medium, to prepare a third composition comprising the carboxyl-group-containing cellulose nanofibers; and

separating the carboxyl-group-containing cellulose nanofibers from the third composition; preferably

wherein the homogenizing of the second composition is performed by using a high-pressure homogenizer; and/or

wherein pressure applied to the second composition in the high-pressure homogenizer is about 2,000 bar or less; and/or

wherein the second composition passes through the high-pressure homogenizer 20 times or less; and/or

further comprising adding a disintegrating agent to the second composition before homogenizing the second composition to prepare the third composition; and/or

wherein the separating of the carboxyl-group-containing cellulose nanofibers from the third composition comprises:

centrifuging or filtering the third composition;

removing a supernatant or a filtrate; and

separating the carboxyl-group-containing cellulose nanofibers from a precipitate or a retentate.

11. The method of claim 10, further comprising destroying cells in the third composition by applying heat to the third composition in an alkali solution; preferably

wherein the alkali solution has a pH of about 10.0 or higher and is heated to a temperature of about 50°C to about 150°C.

12. The method of claim 8, wherein preparing the porous film from the separated carboxyl-group-containing cellulose nanofibers comprises

preparing a fourth composition comprising the separated carboxyl-group-containing cellulose nanofibers and a pore-forming agent; and

removing the pore-forming agent from the fourth composition to prepare the porous film; preferably

wherein the fourth composition further comprises at least one selected from a cross-linking agent and a binder.

13. A non-woven fabric comprising a porous film having a tensile strength of about 60 MPa or greater, the porous film comprising carboxyl-group-containing cellulose nanofibers,

wherein the carboxyl-group-containing cellulose nanofibers comprise a group of Formula 1 or Formula 2 bound to a carbon atom of a pyranose ring in the carboxyl-group-containing cellulose nanofibers:

$$\text{Formula 1} \qquad -R_1\text{-O-}R_2\text{-COOM}$$

$$\text{Formula 2} \qquad -\text{O-}R_2\text{-COOM}$$

wherein $R_1$ and $R_2$ are each independently a substituted or unsubstituted C1-C10 alkylene group, and M is hydrogen or an alkali metal.

14. The non-woven fabric of claim 13, wherein the carboxyl-group-containing cellulose nanofibers comprise carboxyl groups in an amount of about 0.02 mmol/g or greater; and/or

wherein an average diameter of the carboxyl-group-containing cellulose nanofibers is about 45 nm or less; and/or

wherein a FWHM in a diameter distribution graph of the carboxyl-group-containing cellulose nanofibers is about 50 nm or less; and/or

wherein the carboxyl-group-containing cellulose nanofibers comprise microbial cellulose.

**Patentansprüche**

1. Separator, umfassend:

   einen porösen Film mit einer Zugfestigkeit von ungefähr 60 MPa oder mehr, wobei der poröse Film Carboxylgruppen enthaltende Cellulose-Nanofasern enthält,
   wobei die Carboxylgruppen enthaltenden Cellulose-Nanofasern eine Gruppe der Formel 1 oder der Formel 2 enthalten, die an ein Kohlenstoffatom eines Pyranoserings in den Carboxylgruppen enthaltenden Cellulose-Nanofasern gebunden ist,

   Formel 1 : $-R_1-O-R_2-COOM$

   Formel 2 : $-O-R_2-COOM$

   wobei $R_1$ und $R_2$ jeweils unabhängig voneinander eine substituierte oder nicht-substituierte C1-C10-Alkylengruppe sind und M Wasserstoff oder ein Alkalimetall ist, wobei die Zugfestigkeit gemäß der Beschreibung gemessen wird.

2. Separator nach Anspruch 1, wobei:

   die Carboxylgruppen enthaltenden Cellulose-Nanofasern Carboxylgruppen mit einem Anteil von ungefähr 0,02 mmol/g oder mehr enthalten, und/oder
   der durchschnittliche Durchmesser der Carboxylgruppen enthaltenden Cellulose-Nanofasern ungefähr 45 nm oder weniger beträgt, wobei der durchschnittliche Durchmesser gemäß der Beschreibung gemessen wird, und/oder
   die volle Breite bei halbem Maximum in einer Durchmesserverteilungskurve der Carboxylgruppen enthaltenden Cellulose-Nanofasern ungefähr 50 nm oder weniger beträgt.

3. Separator nach Anspruch 1 oder 2, wobei:

   die Carboxylgruppen enthaltenden Cellulose-Nanofasern mikrobielle Cellulose enthalten, und
   die Carboxylgruppen enthaltende mikrobielle Cellulose vorzugsweise eine Absorptionsspitze in der Nähe von 1572 cm$^{-1}$ in einem IR-Spektrum aufweist.

4. Separator nach einem der Ansprüche 1 bis 3, wobei der poröse Film weiterhin Holzcellulose-Nanofasern enthält.

5. Separator nach einem der Ansprüche 1 bis 4, wobei:

   der poröse Film ein Zugmodul von ungefähr 1000 MPa oder mehr aufweist, und/oder der poröse Film eine Porosität von ungefähr 10% bis ungefähr 90% aufweist, und/oder
   der poröse Film eine Luftdurchlässigkeit von ungefähr 3000 Sekunden/100 cc oder weniger aufweist, und/oder
   der poröse Film einen Kontaktwinkel mit Wasser bei 20°C von ungefähr 60° oder weniger aufweist, und/oder
   die Wärmeschrumpfung des porösen Films nach einer Inkubation des porösen Films bei 150°C für 30 Minuten ungefähr 5% oder weniger beträgt, und
   wobei der Zugmodus, die Luftdurchlässigkeit, der Kontaktwinkel und die Wärmeschrumpfung gemäß der Beschreibung gemessen werden.

6. Separator nach einem der Ansprüche 1 bis 5, wobei der poröse Film weiterhin ein Vernetzungsmittel und/oder ein Bindemittel enthält.

7. Elektrochemische Zelle, die den Separator gemäß einem der Ansprüche 1 bis 6 umfasst.

8. Verfahren zum Ausbilden eines Separators, umfassend:

   Fermentieren einer ersten Zusammensetzung, die ein wasserlösliches Polymer und Bakterien enthält, um eine zweite Zusammensetzung zu erzeugen, die Carboxylgruppen enthaltende Cellulose-Nanofasern enthält,
   Trennen der Carboxylgruppen enthaltenden Cellulose-Nanofasern von der zweiten Zusammensetzung, und
   Ausbilden eines porösen Films aus den getrennten Carboxylgruppen enthaltenden Cellulose-Nanofasern.

**9.** Verfahren nach Anspruch 8, wobei:

die Bakterien *Komagataeibacter* sind und die erste Zusammensetzung bei einer Temperatur von ungefähr 28°C bis ungefähr 31,5°C fermentiert wird, und/oder
die Bakterien *Komagataeibacter* sind und die erste Zusammensetzung in einem Hestrin-Schramm (HS)-Medium fermentiert wird, und/oder
die Bakterien *Komagataeibacter xylinus* sind, und/oder
das wasserlösliche Polymer ein Polymer ist, das eine Carboxylgruppe enthält, und/oder
das wasserlösliche Polymer Carboxymethylcellulose (CMC), Alginat, Xanthangummi, Guargummi, Polyacrylat, Polymethacrylat oder eine Kombination aus diesen enthält, und/oder
die erste Zusammensetzung ungefähr 10 Gewicht/Volumen-Prozent oder weniger des wasserlöslichen Polymers basierend auf dem Gesamtvolumen der ersten Zusammensetzung enthält, und/oder
das wasserlösliche Polymer ein Molekulargewicht von ungefähr 10.000 Dalton bis ungefähr 1.000.000 Dalton aufweist.

**10.** Verfahren nach Anspruch 8, wobei das Trennen der Carboxylgruppen enthaltenden Cellulose-Nanofasern von der zweiten Zusammensetzung umfasst:

Homogenisieren der zweiten Zusammensetzung, mit oder ohne einer Entfernung der Bakterien und eines Kulturmediums, um eine dritte Zusammensetzung, die die Carboxylgruppen enthaltenden Cellulose-Nanofasern enthält, zu erzeugen, und
Trennen der Carboxylgruppen enthaltenden Cellulose-Nanofasern von der dritten Zusammensetzung, wobei vorzugsweise:

das Homogenisieren der zweiten Zusammensetzung unter Verwendung eines Hochdruck-Homogenisierers durchgeführt wird, und/oder
der auf die zweite Zusammensetzung in dem Hochdruck-Homogenisierer ausgeübte Druck ungefähr 2.000 bar oder weniger beträgt, und/oder
die zweite Zusammensetzung 20 mal oder weniger durch den Hochdruck-Homogenisierer geht, und/oder
weiterhin ein Sprengmittel zu der zweiten Zusammensetzung vor dem Homogenisieren der zweiten Zusammensetzung für das Erzeugen der dritten Zusammensetzung hinzugefügt wird, und/oder
das Trennen der Carboxylgruppen enthaltenden Cellulose-Nanofasern von der dritten Zusammensetzung umfasst:

Zentrifugieren oder Filtern der dritten Zusammensetzung,
Entfernen eines Überstands oder eines Filtrats, und
Trennen der Carboxylgruppen enthaltenden Cellulose-Nanofasern von einem Präzipitat oder einem Retentat.

**11.** Verfahren nach Anspruch 10, das weiterhin das Zerstören von Zellen in der dritten Zusammensetzung durch das Anwenden von Hitze auf die dritte Zusammensetzung in einer Alkalilösung umfasst,
wobei die Alkalilösung vorzugsweise einen pH-Wert von ungefähr 10,0 oder höher aufweist und zu einer Temperatur von ungefähr 50°C bis ungefähr 150°C erhitzt wird.

**12.** Verfahren nach Anspruch 8, wobei das Ausbilden des porösen Films aus den getrennten Carboxylgruppen enthaltenden Cellulose-Nanofasern umfasst:

Vorbereiten einer vierten Zusammensetzung, die die getrennten Carboxylgruppen enthaltenden Cellulose-Nanofasern und ein Porenbildungsmittel enthält, und
Entfernen des Porenbildungsmittels aus der vierten Zusammensetzung, um den porösen Film auszubilden, wobei die vierte Zusammensetzung vorzugsweise weiterhin ein Vernetzungsmittel und/oder ein Bindemittel enthält.

**13.** Vliesstoff, der einen porösen Film mit einer Zugfestigkeit von ungefähr 60 MPa oder mehr umfasst, wobei der poröse Film Carboxylgruppen enthaltende Cellulose-Nanofasern enthält,
wobei die Carboxylgruppen enthaltenden Cellulose-Nanofasern eine Gruppe der Formel 1 oder der Formel 2 enthalten, die an ein Kohlenstoffatom eines Pyranoserings in den Carboxylgruppen enthaltenden Cellulose-Nanofasern gebunden ist,

Formel 1                : $-R_1-O-R_2-COOM$

Formel 2                : $-O-R_2-COOM$

wobei $R_1$ und $R_2$ jeweils unabhängig voneinander eine substituierte oder nicht-substituierte C1-C10-Alkylengruppe sind und M Wasserstoff oder ein Alkalimetall ist.

**14.** Vliesstoff nach Anspruch 13, wobei:

die Carboxylgruppen enthaltenden Cellulose-Nanofasern Carboxylgruppen in einem Anteil von ungefähr 0,02 mmol/g oder mehr enthalten, und/oder
der durchschnittliche Durchmesser der Carboxylgruppen enthaltenden Cellulose-Nanofasern ungefähr 45 nm oder weniger beträgt, und/oder
die volle Breite bei halbem Maximum in einer Durchmesserverteilungskurve der Carboxylgruppen enthaltenden Cellulose-Nanofasern ungefähr 50 nm oder weniger beträgt, und/oder
die Carboxylgruppen enthaltenden Cellulose-Nanofasern mikrobielle Cellulose enthalten.

## Revendications

**1.** Séparateur comprenant
un film poreux ayant une résistance à la traction d'environ 80 MPa ou plus, le film poreux comprenant des nanofibres de cellulose contenant un groupe carboxyle,
dans lequel les nanofibres de cellulose contenant un groupe carboxyle comprennent un groupe de formule 1 ou de formule 2 lié à un atome de carbone d'un cycle pyranose dans les nanofibres de cellulose contenant un groupe carboxyle;

La formule 1 est             $-R_1-Q-R_2-COOM$

Formule 2               $-O-R_2-COOM$

dans lesquels $R_1$ et $R_2$ sont chacun indépendamment un groupe alkylène en C1-C10 substitué ou non substitué et M est l'hydrogène ou un métal alcalin et dans lequel la résistance à la traction est mesurée conformément à la description.

**2.** Séparateur selon la revendication 1, dans lequel les nanofibres de cellulose contenant des groupes carboxyles comprennent des groupes carboxyles en une quantité d'environ 0,02 mmol/g ou plus; et/ou
dans lequel un diamètre moyen des nanofibres de cellulose contenant un groupe carboxyle est d'environ 45 nm ou moins, le diamètre moyen étant mesuré selon la description;
et/ou
dans laquelle une largeur totale à mi-hauteur (FWHM) dans un graphe de distribution de diamètre des nanofibres de cellulose contenant un groupe carboxyle est d'environ 50 nm ou moins.

**3.** Séparateur selon les revendications 1 ou 2, dans lequel les nanofibres de cellulose contenant un groupe carboxyle comprennent la cellulose microbienne; de préférence
dans lequel la cellulose microbienne contenant un groupe carboxyle présente un pic d'absorption à proximité de 1572cm$^{-1}$ dans un spectre IR.

**4.** Séparateur selon l'une quelconque des revendications 1 à 3, dans lequel le film poreux comprend en outre des nanofibres de cellulose de bois.

**5.** Séparateur selon l'une quelconque des revendications 1 à 4, dans lequel le film poreux a un module de traction d'environ 1000 MPa ou plus; et/ou
dans lequel le film poreux a une porosité d'environ 10% à environ 90%; et/ou
dans lequel le film poreux a une perméabilité à l'air d'environ 3000 secondes/100 cm$^3$ ou moins; et/ou
dans lequel le film poreux a un angle de contact avec l'eau à 20°C d'environ 60° ou moins; et/ou
dans lequel le rétrécissement thermique du film poreux après une incubation du film poreux à 150°C pendant 30 minutes est d'environ 5% ou moins, et dans lequel le module de traction, la perméabilité à l'air, l'angle de contact et le rétrécissement thermique sont mesurés selon la description.

6. Séparateur selon l'une quelconque des revendications 1 à 5, dans lequel le film poreux comprend en outre au moins un agent choisi parmi un agent de réticulation et un liant.

7. Cellule électrochimique comprenant le séparateur selon l'une quelconque des revendications 1 à 6.

8. Procédé de préparation d'un séparateur, le procédé comprenant:

la fermentation d'une première composition comprenant un polymère hydrosoluble et des bactéries pour produire une deuxième composition comprenant des nanofibres de cellulose contenant un groupe carboxyle;
la séparation des nanofibres de cellulose contenant un groupe carboxyle, à partir de la deuxième composition; et
la préparation d'un film poreux à partir des nanofibres de cellulose séparées contenant un groupe carboxyle.

9. Procédé selon la revendication 8, dans lequel la bactérie est la *Komagataeibacter,* et la première composition est fermentée à une température d'environ 28°C à environ 31,5°C; et/ou
dans lequel la bactérie est *Komagataeibacter,* et la première composition est fermentée dans un milieu Hestrin-Schramm (HS); et/ou
dans lequel la bactérie est le *Komagataeibacter xylinus;* et/ou
dans lequel le polymère hydrosoluble est un polymère comprenant un groupe carboxyle; et/ou
dans lequel le polymère hydrosoluble comprend du carboxyméthylcellulose (CMC), de l'alginate, de la gomme de xanthane, de la gomme de guar, du polyacrylate, du polyméthacrylate ou une combinaison de ceux-ci; et/ou
dans lequel la première composition comprend environ 10% en poids/volume ou moins du polymère soluble dans l'eau sur la base d'un volume total de la première composition; et/ou
dans lequel le polymère soluble dans l'eau a un poids moléculaire d'environ 10.000 à environ 1.000.000 de Daltons.

10. Procédé selon la revendication 8, dans lequel la séparation des nanofibres de cellulose contenant un groupe carboxyle, à partir de la deuxième composition comprend:

l'homogénéisation de la deuxième composition, avec ou sans élimination des bactéries et du milieu de culture, pour préparer une troisième composition comprenant les nanofibres de cellulose contenant un groupe carboxyle; et
la séparation des nanofibres de cellulose contenant un groupe carboxyle, à partir de la troisième composition; de préférence
dans lequel l'homogénéisation de la deuxième composition est réalisée en utilisant un homogénéisateur à haute pression; et/ou
dans lequel la pression appliquée à la deuxième composition dans l'homogénéisateur à haute pression est d'environ 2.000 bars ou moins; et/ou
dans lequel la deuxième composition traverse l'homogénéisateur à haute pression 20 fois ou moins; et/ou
comprenant en outre l'ajout d'un agent de désintégration à la deuxième composition avant l'homogénéisation de la deuxième composition pour préparer la troisième composition; et/ou
dans lequel la séparation des nanofibres de cellulose contenant un groupe carboxyle, à partir de la troisième composition comprend:

la centrifugation ou le filtrage de la troisième composition;
l'élimination d'un surnageant ou d'un filtrat; et
la séparation des nanofibres de cellulose contenant un groupe carboxyle d'un précipité ou d'un rétentat.

11. Procédé selon la revendication 10, comprenant en outre la destruction de cellules dans la troisième composition par application de la chaleur à la troisième composition dans une solution alcaline; de préférence
dans lequel la solution alcaline a un pH d'environ 10,0 ou plus et est chauffée à une température d'environ SOX à environ 150°C.

12. Procédé selon la revendication 8, dans lequel la préparation du film poreux à partir des nanofibres de cellulose séparées contenant un groupe carboxyle comprend:

la préparation d'une quatrième composition comprenant les nanofibres de cellulose séparées contenant un groupe carboxyle et un agent formant des pores; et

l'élimination de l'agent porogène de la quatrième composition pour préparer le film poreux; de préférence dans lequel la quatrième composition comprend en outre au moins un agent choisi parmi un agent de réticulation et un liant.

13. Tissu non tissé comprenant un film poreux ayant une résistance à la traction d'environ 60 MPa ou plus, le film poreux comprenant des nanofibres de cellulose contenant un groupe carboxyle,

dans lequel les nanofibres de cellulose contenant un groupe carboxyle comprennent un groupe de formule 1 ou de formule 2 lié à un atome de carbone d'un cycle pyranose dans les nanofibres de cellulose contenant un groupe carboxyle:

Formule 1          $-R_1-O-R_2-COOM$

Formule 2          $-O-R_2-COOM$

dans lesquels $R_1$ et $R_2$ sont chacun indépendamment un groupe alkylène en C1-C10 substitué ou non substitué et M est l'hydrogène ou un métal alcalin.

14. Tissu non tissé selon la revendication 13, dans lequel les nanofibres de cellulose contenant un groupe carboxyle comprennent des groupes carboxyles en une quantité d'environ 0,02 mmol/g ou plus; et/ou

dans lequel un diamètre moyen des nanofibres de cellulose contenant un groupe carboxyle est d'environ 45 nm ou moins; et/ou

dans laquelle une largeur totale à mi-hauteur (FWHM) dans un graphe de distribution de diamètre des nanofibres de cellulose contenant un groupe carboxyle est d'environ 50 nm ou moins; et/ou

dans lequel les nanofibres de cellulose contenant un groupe carboxyle comprennent la cellulose microbienne.

# FIG. 1

# FIG. 2

# FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020160138636

**Non-patent literature cited in the description**

- **SATIO.** *Biomacromolecules,* 2007, vol. 8 (8), 2485-24791